(19)

**Europäisches Patentamt**
**European Patent Office**
**Office européen des brevets**

(11) **EP 3 041 738 B1**

(12) **EUROPEAN PATENT SPECIFICATION**

(45) Date of publication and mention
of the grant of the patent:
**21.03.2018 Bulletin 2018/12**

(21) Application number: **14758112.8**

(22) Date of filing: **26.08.2014**

(51) Int Cl.:
*F03D 7/00* (2006.01)    *B64C 31/06* (2006.01)
*F03D 5/00* (2006.01)

(86) International application number:
**PCT/EP2014/068067**

(87) International publication number:
**WO 2015/032652 (12.03.2015 Gazette 2015/10)**

(54) **METHOD AND DEVICE FOR GENERATING ELECTRICAL ENERGY BY MEANS OF A TETHERED FLYING OBJECT**

VERFAHREN UND VORRICHTUNG ZUR ERZEUGUNG VON ELEKTRISCHER ENERGIE MITTELS EINES GEBUNDENEN FLUGOBJEKTES

PROCÉDÉ ET DISPOSITIF POUR GÉNÉRER DE L'ÉNERGIE ÉLECTRIQUE AU MOYEN D'UN OBJET VOLANT AMARRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2013 CH 15542013**
**08.09.2013 CH 15552013**

(43) Date of publication of application:
**13.07.2016 Bulletin 2016/28**

(73) Proprietors:
• **TwingTec AG**
  **8600 Dübendorf (CH)**
• **EMPA**
  **8600 Dübendorf (CH)**

Inventors:
• **LUCHSINGER, Rolf**
  **CH-8607 Seegräben (CH)**

• **GOHL, Flavio**
  **CH-8340 Hinwil (CH)**

(74) Representative: **Rutz, Andrea**
**Isler & Pedrazzini AG**
**Giesshübelstrasse 45**
**Postfach 1772**
**8027 Zürich (CH)**

(56) References cited:
**WO-A1-01/58755          WO-A1-2010/148373**
**WO-A2-2011/121557      US-A- 5 120 006**
**US-A1- 2002 040 948**

• **Martin Hepperle: "Basic Design of Flying Wing Models Airfoils for Flying Wings", , 1 December 2002 (2002-12-01), pages 1-9, XP55145526, Retrieved from the Internet: URL:http://www.mh-aerotools.de/airfoils/fl ywing1.htm [retrieved on 2014-10-09]**

Printed by Jouve, 75001 PARIS (FR)

**Description**

TECHNICAL FIELD

The present invention relates to a method for controlling a flying object according to the preamble of Claim 1, a flying object according to the preamble of Claim 5 and a device for generating electrical energy with such a flying object according to Claim 14.

PRIOR ART

Wind power plants for renewable energy are known and are implemented in different designs, for small systems often as windmills with a rotor driven by the wind, but which are increasingly installed as large systems with a rated power in the Megawatt range. For the exploitation of steady and powerful winds, such as occur at altitudes from about 30 m to several hundred metres, kites have been proposed consisting of a flexible foil that fly cross wind in the wind window at such altitudes, and that drive a generator winch by means of their lift in a power phase until the tether has been extended. Then the kite is retracted against the lift forces over a flight path at the edge of the wind window with reduced lift with very low force in the tethers by driving the winch by means of a motor and thus the kite is reeled in by means of the tether in the depower phase until the power phase can be started again. Said cycle is repeated while the wind allows this.

A kite or stunt kite of the above-mentioned type consists of a flexible foil, which is usually held by a number of tethers in a curved configuration when operatively inflated by the wind. In the power zone of the wind window, i.e. in a zone in which the tether essentially lies in the wind direction, the kite generates considerable tension forces; in the lateral edge zone above and besides the power zone, which also contains the zenith, the tension force reduces drastically.

In the power phase the kite is e.g. controlled such that the flight path follows a lying figure of eight, which lies in the power zone as far as possible. The kite is manoeuvred by two tethers, which engage the ends of the kite. Pulling on one of the lines causes a distortion of the kite with increased air resistance at the corresponding end, so that said end is decelerated and the kite thus flies along a corresponding arc.

In WO 2011/121557 an arrangement is shown for operating both control lines for such a kite, wherein one line is reeled in and the other line is reeled out by means of a gearbox in each case. Furthermore, it is proposed to additionally apply a system of motors and lines to the ends of the kite, so that the angle of attack of the kite can be changed at any time. Finally, it is further envisaged that by means of the disclosed arrangement for operating two control lines a flying object with a stiff airfoil and lateral stabilisation at the rear could be launched and landed better by fixing the two control lines to the flying object such that its angle of attack is changed by means of a differential movement of the two control lines.

Although such a flying object with a stiff airfoil is yet to be practically tested, it appears conceivable that this has definite advantages in launching and landing behaviour compared to a kite consisting of a flexible foil. For the actual task of a kite in the field of wind power plants it is, however, expected that the flying object according to WO 2011/121557 is far inferior: lacking manoeuvrability, it can only be held directly in the wind direction during flight, in which, stabilised by the lateral surfaces on the tail, it can only be manoeuvred by means of the winches for the tethers in a vertical plane in which the tethers themselves also lie. It is, however, not possible to fly a standing eight in the power phase similar to the lying figure of eight of the kite with the flexible foil (which has to be reduced to pure up and down movement in the vertical plane in this case because the flying object shown cannot fly in an arc). Following the upward movement there remain only two possibilities for the downward movement: either flying backwards and downwards over the stern, with a corresponding unstable flight path because of the leading lateral stabilising surface, or exiting the power phase, reeling in the tethers onto the winch with a descent and then initiating a new power phase with a single ascent (as explained: instead of the repeated up and down in the sense of the standing eight). The time proportion of the depower phase is thus considerably higher than that of a kite and the maximum achievable average power is correspondingly much lower. As a result a not manoeuvrable flying object according to WO 2011/121557 is clearly inferior to the kite in respect of the conversion of wind energy into a different form of energy.

US 2002/0040948 discloses a tethered flying object for generating electrical energy that comprises a plurality of inflatable airfoil kites. Four support/control-lines are used to connect the airfoil kites to a ground station.

In WO 2011/121557, a system for converting wind energy into electrical energy is shown having a flexible kite that is manoeuvrable by means of a differential operation of two tethers. The same document also discloses a flying object that has a rigid construction and is connected to the ground by means of two cables.

SUMMARY OF THE INVENTION

It is an object of the present invention to provide a method that enables a more efficient conversion of wind force into a different form of energy by means of a flying object. This object is solved by a method as claimed in claim 1. A flying object used for carrying out such a method is claimed in claim 5, and a device for generating electrical energy that comprises such a flying object is claimed in claim 14. Preferred embodiments of the invention are provided in the dependent claims.

In the present description the term "kite" is exclusively used for a flexible stunt kite made of a foil. The shape and the aerodynamic profile of kites usually is only fully established by the ram pressure of the incident wind. By contrast, the term "twing" means a flying object with a stiff airfoil. An airfoil is meant to be stiff, if its shape and aerodynamic profile is independent of the actual wind regime to a large extent. Thus, the shape and aerodynamic profile of a stiff airfoil usually is fully established and defined, even if no wind is present at all.

The present invention provides a method for controlling a flying object having a stiff airfoil and being connected by means of only two tethers to a ground station. The stiff airfoil can be controlled by means of a roll movement for carrying out lateral turns, and the flying object is connected such to the ground station by means of the two tethers, that the flying object is rolled during flight by a differential movement of the tethers, and the flying object is rolled during flight by such differential movements and is thus manoeuvred through the turning flight that is caused in this way.

As a result of using a flying object flying in an arc by means of a roll movement, the necessary manoeuvrability can be achieved by means of only two tethers arranged for a roll movement and thus the necessary manoeuvrability is also ensured. For example, it is easily possible according to the invention to keep the flying object flying with a flight path corresponding to a lying (or standing) figure of eight of any length in the power zone. Thus, the method allows manoeuvring a flying object with a stiff airfoil and, hence, with usually a good launching and landing behaviour. By being able to manoeuvre such a flying object, a more efficient energy conversion of wind force into electrical energy can be achieved. It should be noted here that the airfoil profile can be easily designed by the person skilled in the art as required such as to achieve the desired flight characteristics, e.g. by an S-shaped profile.

The person skilled in the art of aerodynamics can readily design a tethered flying object with a stiff airfoil such, that turning flight by means of a roll movement is achieved. Turning flight by means of a roll movement can be easily achieved by the skilled person with most winged aircrafts: Indeed a roll movement induced by means of a differential movement of the tethers only generates a lateral translation of the wing at first, but with the onset of the translation the flying object pivots into the resultant of the wind flow (relative forward speed and translation), so that turning flight results. The pivoting motion of the turning flight can be fostered e.g. by one or more vertical rudders or stabilizers. The pivoting motion can also be achieved by winglets arranged at the wing tips of the airfoil or by the sweep of the wing, e.g. for flying wings.

In order to achieve a roll movement for the execution of lateral turns, the tethers are usually attached to the flying object at two pivot points being arranged distant from each other. The pivot points are usually arranged on an imaginary line that extends essentially perpendiculary to the longitudinal centre axis of the flying object. Advantageously, the pivot points are arranged symmetrically relative to the longitudinal centre line of the flying object.

Basically, the two tethers could be connected to each other in a connection point arranged at a certain distance between the flying object and the ground station. A single further tether could then connect this connection point with the ground station. The differential movement could in such a case be effected e.g. by an actuating device, such as a servomotor, arranged in each pivot point or in the connection point. Preferred, however, is an embodiment in which each of the two tethers is connected to the ground station and the differential movement is produced in the ground station. By having the actuating device for carrying out the differential movement of the tethers in the ground station, the weight of actuating device does not influence the aerodynamics of the flying object.

The result is a method for controlling a flying object having a stiff airfoil and being controllable by roll movement to carry out lateral turns, wherein the flying object is connected by means of two tethers to a ground station, such that the flying object rolls during flight owing to a differential movement of the tethers, and that the flying object is rolled during flight by such differential movements and is thus manoeuvred by means of the resulting turning flight.

At this point is should be noted that in the present description the term "stiff airfoil" can be seen as distinct from the kite: a kite can only fly if the foil is stabilized by the ram pressure of the incident wind, and will usually crash once this no longer occurs for only a moment because it has then irreversibly lost its flight capable configuration, flutters in an undefined form and thus can no longer generate lift. This prevents to fly at a small angle of attack and high reel in speeds in comparison with a stiff airfoil. A stiff airfoil according to the invention is accordingly an airfoil of substantially fixed form with an aerodynamic profile, which is not deformed in respect of the flight characteristics to an unacceptable extent, even at higher speeds or smaller angles of attack than can be achieved with a kite. Of course, the properties of a stiff airfoil also include that the same can be rolled by means of two tethers for turning flight and is not twisted to an unacceptable extent for safe flying during this.

Advantageously, the flying object is further manoeuvred during flight by means of a pitch movement, which is carried out by a device for changing the angle of attack of the flying object. The angle of attack is the angle with which the flying object, represented by the chord line, is oriented relative to the apparent wind direction. This device is advantageously mounted on the flying object, preferably in the form of an elevator, and the device in turn is preferably controlled by the ground station. For the control of the device, for example a wire or a radio connection to the ground station can be provided.

The flying object is advantageously manoeuvred during flight such, that it preferably repeatedly flies a cycle consisting of a power phase and a depower phase. In the power phase, electrical power is usually generated by means of the flying object, e.g. by driving a generator in the ground station, and in the depower phase, electrical power is usually consumed by means of the flying object, e.g. by reeling in the flying object by means of a motor in the ground station.

The present invention additionally provides a flying object with a stiff airfoil, for carrying out the method as indicated. The flying object can be connected by means of tethers to a ground station and comprises two pivot points for the connection of these tethers to the flying object, in particular to the airfoil. The pivot points are disposed on the flying object such, that the flying object can be rolled during tethered flight by means of differential operation of the only two tethers. The flying object is designed such, that it performs a lateral turn during flight because of a roll movement. Thus, a roll movement of the flying object results in a lateral turn.

Along the longitudinal direction of the flying object, the pivot points for the tethers are disposed at or before, with respect to the normal wind inflow direction, the position of the centre of gravity of the flying object. With such an arrangement of the pivot points on the flying object, a stable flight attitude of the flying object can be achieved particularly in real situations in which the tether force varies as a function of the apparent wind speed and of the angle of attack. If the pivot points and the position of the centre of gravity of the flying object are arranged at essentially the same position along the longitudinal direction of the flying object, the change of the force balance at the flying object under different flight conditions is minimized.

Along the span direction, the pivot points for the tethers are preferably provided at a distance measured from the centre of the airfoil, which is in the region of one quarter to one half of the distance between the centre and a wing tip of the airfoil. With a smaller distance, the forces required for rolling are large and the load distribution on the airfoil itself is unfavourable.

The pivot points can be provided at the airfoil or at the fuselage. If, however, the pivot points are arranged at the airfoil and particularly at the main load bearing structure of the airfoil, the tether forces are optimally introduced into the flying object. In typical airfoils, the main load bearing structure is a main spar which is often located where the profile has its highest thickness. Typically, this is at about one quarter of the chord length of the airfoil.

If the pivot points for the tethers are provided at a distance of about one quarter of the chord length of the airfoil, favourable flight characteristics and a good distribution of the forces acting on the airfoil are generally obtained. Due to the same reasons, the pivot points are advantageously arranged symmetrically with respect to the longitudinal centre axis of the flying object.

In a preferred embodiment, in order to achieve a particularly stable flight attitude, the centre of gravity of the flying object lies before the aerodynamic neutral point of the flying object along the longitudinal direction of the flying object and with respect to the normal wind inflow direction. The neutral point or aerodynamic centre is the position at which the pitching moment coefficient for the airfoil does not vary with the lift coefficient.

In order to optimally distribute the forces acting on the flying object, the pivot points for the tethers are advantageously provided at the position of the greatest profile thickness of the stiff airfoil.

If the system has two tethers which are also used to control the roll angle of the aircraft by differential tether length, an optimum between structural demands and control usually needs to be found. From a structural and aerodynamic point of view it can be favourable to have only upward bending of the airfoil over the full span of the airfoil. The optimal distance of the two tether connection points, i.e. the pivot points, along the span direction of the airfoil is then in the range of 32% to 52%, preferably 37% to 47%, and more preferably at about 42% of the span, with respect to the distance measured between the centre and the respective wing tip of the airfoil, assuming an elliptic lift distribution. The bending moment vanishes at the center of the wing in this case.

The larger the distance between the tether connection points, the larger the differential steering length of the two tethers to obtain a given roll angle at the wing. The differential steering length has implications on the design and dynamics of the winches of the ground station. For a given system, the best compromise between structural and aerodynamic benefits of the tethered flying object and the design of the ground station needs to be found. Good values for the distance between the tether connection points are between 25% and 60% of the entire span of the airfoil, i.e. of the distance between the wing tips of the airfoil. A particular good value is about 40% of the span of the airfoil.

In the vertical direction, the pivot points are preferably arranged at the center of gravity of the flying object or at a position on the airfoil which is close to the center of gravity. Consequently, the pivot points are advantageously arranged, in the vertical direction, within the airfoil or directly at the outer surface of the airfoil. If the pivot points are mounted at a considerable distance below the center of gravity, the line of action of the tether force can lie in front or behind the neutral point depending on the angle of attack of the airfoil. This can lead to unstable flight conditions.

Since the pivot points and the center of gravity preferably are very close to each other, this usually has implications on the design of the aircraft. For a system with more than one tether connection, the flying object thus is preferably designed such, that the center of gravity of the flying object lies at the location of the main load bearing structure of the airfoil in the longitudinal direction such that the tether forces can be directly introduced into the airfoil.

In vertical direction, the center of gravity often lies within the flying object where the tethers cannot be attached. In praxis, good tether connection points are at the lower surface of the airfoil for two and more pivot points.

For achieving better manoeuvring properties, a device for changing the angle of attack during flight can be provided on the flying object, preferably in the form of an elevator.

Furthermore, the invention provides a device for generating electrical energy comprising a tethered flying object as set out above, a ground station and two tethers. The two tethers extend from the ground station to the flying object and are connected to the flying object. The ground station comprises an actuating device for the tethers and is designed for differential movement of the tethers such that the flying object can be manoeuvred during flight for a predetermined turning flight.

Preferably, a device for changing the angle of attack during flight is provided on the flying object, more preferably in the form of an elevator. The ground station can then comprise a controller for controlling the device for changing the angle of attack such that the tethered flying object flies a depower phase with a predetermined route during operation.

In a particularly preferred embodiment, the actuating device comprises a device for angle compensation, which is adapted to detect and change and preferably compensate a differential movement of the tethers resulting from the lateral deflection of the tethers relative to the ground station. Advantageously, the device for angle compensation is adapted to carry out the angle compensation automatically.

SHORT DESCRIPTION OF THE FIGURES

The invention is described in detail below using the figures.

In the figures:

Fig. 1     shows schematically a system according to the invention for generating electricity from the force of the wind according to a preferred embodiment;

Fig. 2a    shows schematically a flying object according to the invention suitable for the implementation of the method according to the invention;

Fig. 2b    shows for comparison a kite according to the prior art;

Fig. 2c    shows a diagram with a possible airfoil profile for a flying object according to Fig. 2a;

Fig. 2d    shows a diagram with the profile of the kite according to Figure 2b;

Fig. 3a    shows a diagram with the outline of a power-optimised flight path, achieved by the method according to the invention and the flying object according to the invention, wherein additionally the flight path of a conventional kite is shown for comparison;

Fig. 3b    shows a diagram with a side view of the power-optimised flight path of Fig. 3a, in addition with the flight path of the conventional kite;

Fig. 3c    shows a diagram with a frontal view of the power-optimised flight path of Fig. 3a, in addition with the flight path of the conventional kite;

Fig. 4a    shows a diagram with the power made usable and to be applied during the flight path according to Figures 3a and 3b for the use of the method according to the invention and of the flying object according to the invention, again with the power for the case of a conventional kite for comparison;

Fig. 4b    shows a diagram with the force occurring at the winch that can be used and that is to be applied in the case of the flight path according to Figures 3a and 3b and the power according to Figure 4a including comparison with the conventional kite;

Fig. 4c    shows a diagram that shows the speed of the wound tether on the winch for the details of diagrams 4a and 4b, likewise with a comparison for a conventional kite;

Fig. 4d    shows a diagram that shows the lift coefficients of the flying object and of the conventional kite for the details of diagrams 4a and 4b;

Fig. 4e    shows a diagram that shows the ratio of the lift and resistance coefficients of the flying object and of the conventional kite;

Fig. 5     shows a characteristic curve diagram with real values for determining the reeling in and reeling out speeds;

Fig. 6     shows the forces and velocities of a kite flying crosswind;

Fig. 7     shows the relative reel out speed, relative reel in speed and normalized maximal cycle power factor for a pumping cycle (left) and shows the ratios of the reel out and reel in speed, tether force ratio and power ratio of reel in and reel out (right);

Fig. 8     shows the optimal reel out speed, reel in speed and power factor as a function of the wind speed (left) and shows the tether force and power ratio as a function of wind speed (right);

Fig. 9     shows the power curve of a pumping cycle kite power system;

Fig. 10    shows the reel out and reel in speed along with normalized power curves for a kite power system with force control by increased reel out speed for wind speeds above nominal wind speed;

Fig. 11 shows the cycle power for a 3 phase strategy ($v_{n,T} < v_{n,P}$) and a two phase strategy ($v_{n,T} = v_{n,P}$) (above) and the according winch velocities (bottom);

Fig. 12 shows the Weibull probability density function for the wind distribution;

Fig. 13 shows the normalized average mechanical power of a pumping kite power system;

Fig. 14 shows the average mechanical power as a function of the average wind speed;

Fig. 15 shows the forces of a kite flying circular patterns; and

Fig. 16 shows the normalized power as a function of the mass per area of the kite.

DESCRIPTION OF PREFERRED EMBODIMENTS

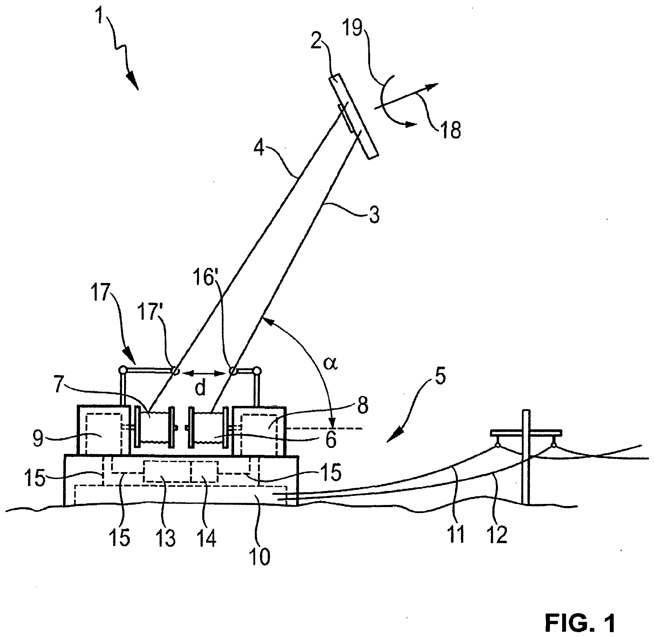

Figure 1 shows schematically a system 1 according to the invention, with which the method according to the invention can be implemented. A flying object 2 is connected to a ground station 5 by means of two tethers 3, 4. The ground station 5 in the embodiment shown comprises two drums 6, 7 for the independent take-up of the tethers 3, 4, wherein each drum 6, 7 is connected to a motor-generator 8, 9 that is shown by dashed lines. In the ground station 5 there is preferably a battery 10 that is connected to loads by means of power lines 11, 12 and in which electricity generated in the power phase of the flying object 2 can be temporarily stored. It is also possible to connect the system 1 directly to the power supply system (lines 11, 12) without a buffer battery.

A controller 13 that is shown in dashed lines for the components of the ground station 5 is operatively connected to a memory 14, in which inter alia the necessary data for the operation of the ground station 5, including for fully automatic operation, can be stored. Such data include e.g. key figures for the currently operated flying object and characteristic fields for its flight characteristics under different weather conditions and flight attitudes. Such data further include the necessary characteristic fields for charging the battery 10 or for taking current in the case of motor operation of the motor-generators 8, 9. Depending on the implemented embodiment, the controller 13 is able to control the tethers according to the flight program to be flown by means of the motor-generator power, so that the kite flies the provided turns (or the turns caused manually, e.g. by means of a joystick), carries out angle compensation and/or optimises the power in the power phase or in the depower phase. For this purpose the necessary characteristic fields for the control of the motor-generators 8, 9 are stored in the memory 14, which allow the tethers 3, 4 to be reeled out and reeled in with a predetermined speed. Said speeds determined by the respective flying object 2 and the respective prevailing wind speed can then e.g. be maintained or produced by controlling the extracted generator power or the generated motor power. The memory 14 can also contain the necessary characteristic fields for the control of a rudder of the flying object 2, such that the same can be manoeuvred better. The motor-generators 8, 9, the battery 10, the controller 13 and the memory 14 are operatively connected to each other by means of the lines 15, which are also shown by dashed lines.

The ground station 5 basically can be operated with any implementation of a flying object with a stiff airfoil, but a flying object that can be rolled by means of the tethers is preferred.

Although the illustrated system 1 with the ground station 5 forms a preferred embodiment, the tethers 3, 4 can also be reeled out and reeled in by means of a different, suitably designed actuating device (in this case the drums 6, 7, connected to the motor-generators 8, 9).

Two sensor arrangements 16, 17 are also shown schematically with output rollers 16', 17' for the tethers 3, 4, which are continuously dragged by these during operation so that the output rollers 16', 17' form sensors for the current direction of the tethers 3, 4 at the same time. Together with sensors for the length of the reeled-out tethers 3, 4, which are not shown in order to simplify the figure, said sensors can transmit real-time data about the current location of the flying object 2 to the controller 13 using the detected data, wherein the controller 13 can simultaneously determine the current speed vector and acceleration vector of the flying object 2 from said data. Such sensors can easily be conceived by the person skilled in the art for the specific ground station or designed as a boom according to the schematic illustration in the figure, with which the height and angular position is a measure of the current location of the flying object 2.

At this point it should be noted that the ground station 5 can also be disposed so as to be rotatable relative to the ground, wherein the current alignment can also be recorded by a sensor and transmitted to the controller 13.

During the operation of the system 1 the flying object 2 pulls the tethers 3, 4 from the drums 6, 7 in the drive phase and thereby drives the motor-generators 8, 9, which accordingly generate electricity. In the depower phase the motor-generators 8, 9, being supplied by the battery 10 (or even directly by the connected power supply system 11, 12), drive the drums 6, 7, which rewind and therefore reel in the tethers 3, 4, so that the flying object 2 approaches the ground station 5. If a turn is being flown in the power phase, the resistance for the rotation of one drum 6 or 7 is reduced by the controller 13 in the drive phase in a predetermined manner, so that the corresponding tether 3 or 4 (on the outside in relation to the turn) reels out slightly faster, whereby there is a differential movement between the tethers 3, 4, which causes the desired roll movement of the flying object 2. Alternatively, the drum 7 or 6 on the inside of the turn can also be slowed in a predetermined manner. Preferably, the rotational speed of the drums 6, 7 can be adjusted by means of the generator power of the motor-generators 8, 9. If the roll movement is to be reversed again, the rotational resistance of the other drum 7 or 6 is reduced in a predetermined manner by the controller 13, so that the corresponding tether 4 or 3 (on the inside in relation to the turn to be ended) reels out somewhat faster, until the controller 13 detects by means of the sensors that the new desired course of the flying object 2 has been applied. Alternatively, the drum 6 or 7 on the outside of the turn can also be slowed. The resistance to the rotation of a drum 6, 7 is preferably regulated by the associated motor-generator 8, 9 taking less power in the generator mode.

If a turn is being flown in the depower phase, the tether 3, 4 on the inside of the turn is preferably reeled in with an increased revolution rate of the corresponding drum 6, 7.

It follows that each of the two tethers 3, 4 is connected to the ground station 5, wherein their differential movement is produced in the ground station 5.

It also follows that in a power phase the flying object generates work by pulling on the tethers reeled out from the ground station, wherein the differential movement is carried out by the ground station releasing a respective tether more quickly compared to the other tether for the duration of a roll movement in respect of a turn that is currently to be flown.

The controller 13 is preferably not only designed to control the motor-generators 8, 9 for the above-mentioned differential movements, but also for an angle compensation of the tethers 3, 4 if the flying object 2 is disposed to the side of the ground station 5. In the figure the flying object 2 is disposed to the right side of the ground station and is flying upwards at an angle in the direction of the arrow 18. This results in a roll movement of the flying object 2 in the direction of the arrow 19, caused by the distance between the tethers 3, 4 at the location of the output rollers 16, 17. Depending on the desired flight path, said roll movement is desired or not desired and can be maintained by the controller 13 (no change of the synchronous rotation speed of the drums 6, 7) or compensated and boosted further by initiating a corresponding differential movement. If, still in the flight attitude of the flying object 2 shown in the figure, the roll movement is boosted, the controller 13 controls the motor-generator 8 such that the tether 3 unreels more easily and hence somewhat faster from its right drum 6. If the roll movement according to arrow 19 is to be compensated (so that rolling stops), the controller 13 controls the motor-generator 9 such that the tether 4 unreels more easily and hence somewhat faster from its left drum 7 until the lateral offset of the flying object 2 relative to the ground station 5 is continuously neutralised.

The roll movement can e.g. be desirable because of flying transversely relative to the ground station 5 (or can still be intentionally boosted by the angle compensation) in the case in which the arc of the lying figure of eight is being flown from bottom to top, and undesirable in the case in which the arc is flown from top to bottom. The angle compensation can accordingly be used to control the predetermined flight path.

The magnitude of the roll movement results (for a horizontal arrangement of the guide rollers 16', 17') from the distance d of the guide rollers 16', 17' multiplied by the cosine of the angle $\alpha$ between the line through the axles of the drums 6, 7 and the direction of the tethers 3, 4. Accordingly, e.g. for the angle compensation with the flight direction shown in the figure, the left tether 4 in the figure has to be continuously unreeled further relative to the right tether 3 by the magnitude $d*cos\alpha$, which is carried out by the controller 13 in the power phase preferably by means of suitable control of the motor-generator 9 for faster unreeling of the tether 4.

The result is that the actuating device of the ground station 5 comprises a device for angle compensation, which detects a differential movement of the tethers because of a horizontal deflection of the tethers relative to the ground station 5 in this case and changes and preferably compensates the differential movement.

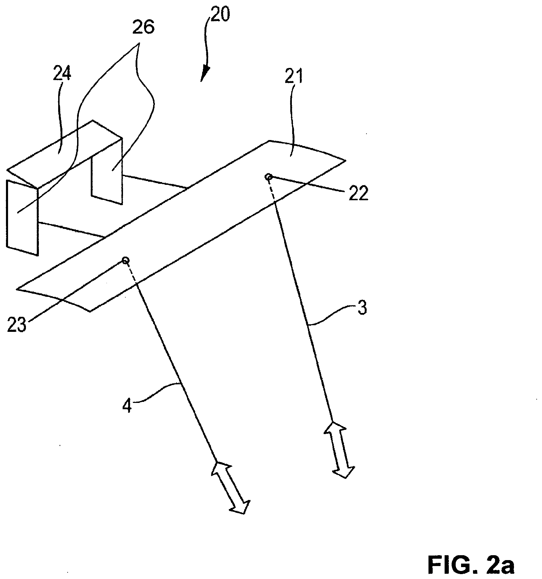

Figure 2a shows schematically a flying object 20 according to the invention with a stiff airfoil 21 to which the tethers 3, 4 are hinged by means of pivot points 22, 23. The pivot points 22, 23 are disposed such that the flying object 20 rolls during flight with differential operation of the tethers 3, 4. Differential operation is understood in the present description to mean that the tethers 3, 4 are intentionally displaced relative to each other, wherein such a relative motion can also be superimposed on the tethers 3, 4 that are basically reeling out or reeling in at the same speed. The rolling motion of the flying object 20, caused by differential operation of the tethers 3, 4, results in a pivoting motion due to the presence of vertical stabilizers 26. Thus, the positioning of the pivot points 22, 23 on the stiff airfoil in combination with the provision of the vertical stabilizers 26 enable the flying object 20 to be manoeuvred through a turning flight by means of differential operation of the tethers 3, 4. The flying object 20 also comprises in the present embodiment a means for changing the angle of attack during flight (pitching motion) in the form of an elevator 24. The angle of attack of the elevator 24 can be changed with a drive integrated within the kite and can preferably be remotely controlled by the ground station.

The person skilled in the art can optimally determine the distance between the pivot points 22, 23 for the specific flying object.

As a result a ground station 5 and two tethers 3, 4 extending from the same to the flying object 2, 20 and hinged to the same are provided for the tethered flying object 2, 20, wherein the ground station 5 comprises an actuating device for the tethers designed for differential movement of the tethers 3, 4 (for the embodiment shown in Figure 1: drums 6, 7, motor-generators 8, 9, controller 13 and sensors 16, 17), such that the flying object 2 can be manoeuvred during flight for a predetermined turning flight.

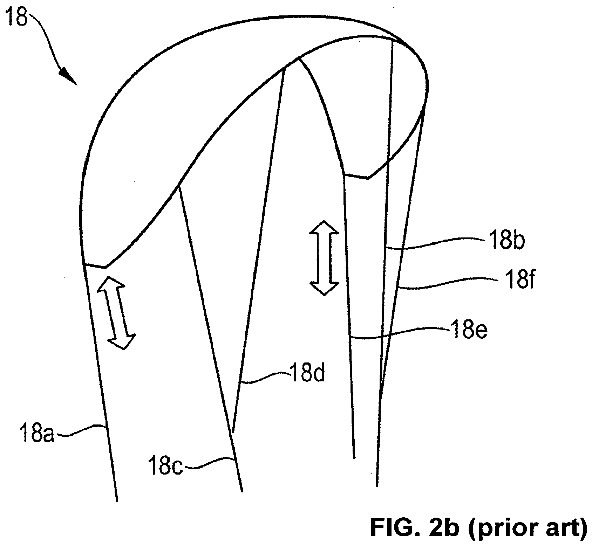

Figure 2b shows for comparison with the flying object 20 (Figure 2a) a kite 18 as known from the prior art and compared in the present description with the flying object according to the invention. The kite 18 is controlled for a change of course by means of control lines 18a and 18b, and comprises further lines 18c, 18d, 18e and 18f, whose purpose is known to the person skilled in the art. It should be noted here that the lines have a significant air resistance that is relevant to the operation of the kite.

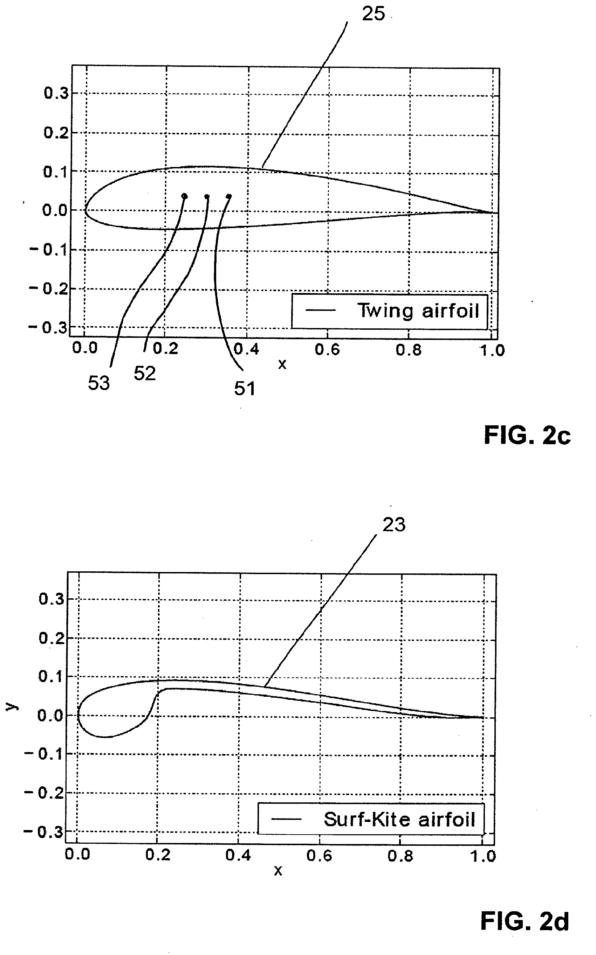

Figure 2c shows a computer-defined airfoil profile 25 for the flying object 22 (Figure 2a) that satisfies the requirements relating to high lift (power phase) and manoeuvrability. In addition a flying object 22 (Figure 2a) with such an airfoil profile 25 can be flown with a small angle of attack (depower phase). The stiff airfoil 21 of the flying object 20 (Figure 2a) allows also for a higher speed and thus greater efficiency as it can be made more slender in comparison to the airfoil of the kite 18 (Figure 2b) in the form of a surf-kite with the profile 23 as shown in Figure 2d. In principle, therefore, a flying object 20 with a stiff airfoil 21 (Figure 2a) is superior to the kite according to the prior art (Figure 2b) for generating energy in the power phase, provided however that such a flying object can be manoeuvred properly, especially because of the high speeds to be flown, which again is achieved by the present invention.

In figure 2c the neutral point 51, the centre of gravity 52 of the flying object 2, 20 (Figures 1 and 2a) and a pivot point 53 for the tethers 3, 4 are shown schematically. Preferably, the pivot points 53 for the tethers 3, 4, looking in the longitudinal direction of the flying object 2, 20, are disposed at or before the position of the centre of gravity 52 of the flying object 2, 20, while further preferably the flying object 2, 20 is designed such that its centre of gravity 52 lies before the neutral point 51.

It is further preferable that the stiff airfoil 21 of the flying object 2, 20 (Figures 1 and 2a) is designed such that the pivot points 53 for the tethers 3, 4 are provided at the position of the greatest profile thickness.

If in one embodiment the pivot points 53 for the tethers 3, 4 are disposed at the position of the centre of gravity 52, the angle of attack of the wing remains essentially constant during the power phase, without adjustment of the elevator. Otherwise, the angle of attack has to be held constant at the target value by means of the elevator.

If it is considered that the purpose of the control method according to the invention and of the flying object according to the invention is to provide as much lift as possible, it follows that the flying object itself should be as light as possible, which is the case if as many of the necessary components as possible can be disposed in the ground station, as is the case here. By means of the manoeuvring according to the invention of the flying object by means of two tethers, almost the entire controller can be contained within the ground station. One exception for a preferred embodiment is the elevator, whose drive motor can be supplied either by a battery or via cable (tethers), depending on the weight optimisation in the specific case. Likewise the means for implementing the angle of attack (rudder) is preferably designed to be remotely controlled by the ground station, because then the necessary elements can be disposed in the ground station.

Figure 2d shows the profile 23 of the surf-kite of Figure 2b as it was used for the comparison (see below). Due to the characteristic profile as shown in Figure 2d, the respective kind of kites can also be referred to as tube-kites.

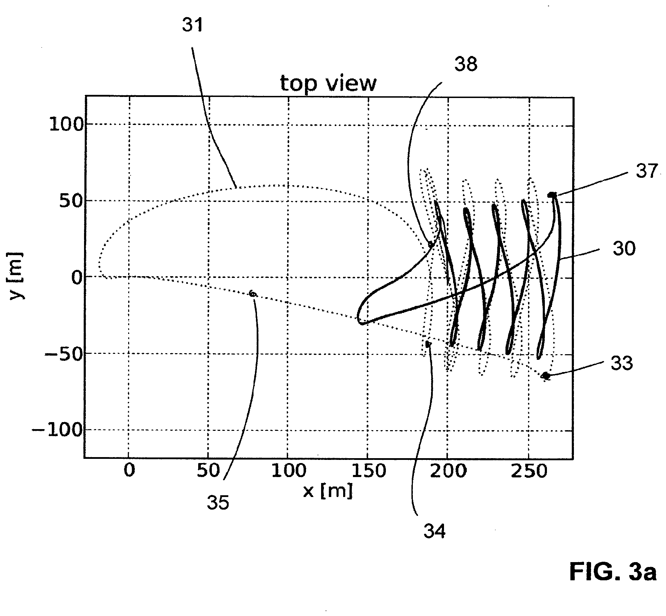

Figures 3a to 3c show diagrams with data for a preferred flight path according to the invention, such as can be flown with a flying object 2, 20 (Figure 1 and 2a) manoeuvred according to the invention, as well as, as is generally shown in dashed form, the data of the comparable kite 18 (Figure 2b). A kite is comparable for the purposes of the present description if it comprises essentially the same area as the airfoil of the underlying flying object according to the invention. The data in the diagrams of Figures 3a to 3c were derived from a realistic simulation calculation, the following data being for the flying object according to the invention and a compared kite:

|  | surf-kite | twing |
| --- | --- | --- |
| projected area | 23.0 m$^2$ | 23.2 m$^2$ |
| total area | 36.1 m$^2$ | 25.47 m$^2$ |
| Leading edge length | 12.6 m | 10 m |
| aspect ratio | 4.4 | 5 |
| airfoil | LE-airfoil | SD7032 mod. |
| weight | 10.8 kg | 20 kg |
| weight per total area | 0.3 | 1 |
| curvature | -90° | 0° |

Figure 3a shows a diagram with the outline of a power-optimised flight path 30 according to the invention, achieved by means of the method according to the invention and the flying object 2, 22 according to the invention, wherein in addition the flight path 31 of the conventional kite 18 is shown for comparison.

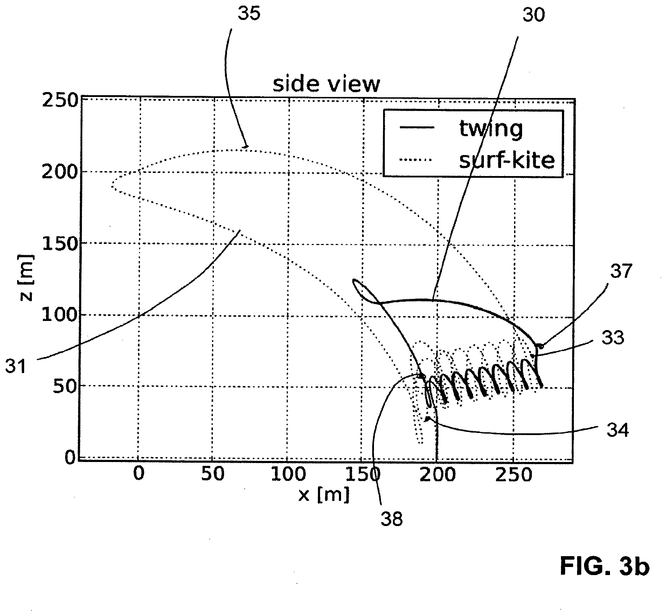

Figure 3b shows the same flight paths 30, 31, but from the side. The ground station is located at the point with coordinates 0,0,0. The wind direction runs in the positive x-direction. The figure flown by both the kite 18 and the flying object 2, 22 according to the invention corresponds to a lying figure of eight, essentially transverse to the wind direction, as is necessary for maximum power. It should be noted at this point that of course any other figures, such as e.g. a circle or a standing figure of eight can be readily flown. The lying figure of eight is preferred, however.

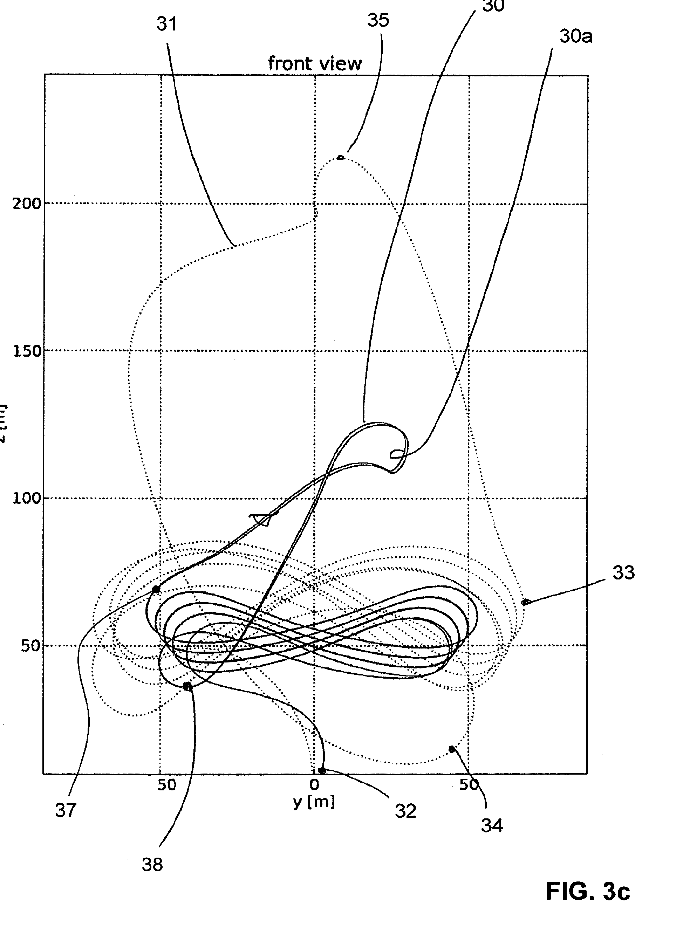

Figure 3c shows a view of the flight paths 30, 31 from the front. The starting point for both flight paths is the point 32 with the coordinates 0,0. Because the flying object 2, 20 can be manoeuvred for a roll movement for faster flight thanks to its stiff airfoil and its suspension on the tethers according to the invention, as is the case with the kite 18 according to the prior art, the flying object 2, 20 passes through two flight cycles in the time in which the kite 18 completes one flight cycle, wherein according to Figures 3a and 3b both traverse approximately the same path in the x-direction, i.e. the power direction. Accordingly, two flight paths 30 and 30a of the flying object 2, 20 are shown in the figure, but they partly coincide.

In the figure it is further apparent that for the depower phase, starting at point 33 and ending at point 34, the kite 18 is initially flown to the zenith 35 and is brought down from there to the starting point 34 for the next power phase. Said flight path is based on the aerodynamic properties of the kite 18 and the method established in the prior art to operate in the depower phase with very low force in the tethers, i.e. an amount of work in the ground station for the kite 18 that is kept low because said amount of work reduces the usable energy.

In contrast, the flying object 2, 20 according to the invention is reeled in on a direct path without deviation and with high force expenditure: the flight path in the depower phase, starting at point 37 and ending at point 38, is extremely short compared to that of the kite 18. Despite the very much greater force expenditure to be applied by the ground station for this purpose and thus the high power to be applied, said flight path is advantageous: because of the only short time interval for the depower phase, the average power over the entire cycle is reduced less than is the case for the flight paths of the kite 18 according to the prior art, in this case the flight path 31.

Accordingly a method results with which during flight the flying object is manoeuvred such that it preferably repeatedly starts a cycle consisting of a power phase and a depower phase, wherein power is generated in the power phase and consumed in the depower phase by means of the flying object, and wherein the flying object is further manoeuvred in the depower phase such that the average power provided during the entire cycle is approximately or essentially maximised.

Maximising the power is to be viewed with respect to the specific ground station with the tethers and the specific flying object, because e.g. depending on their specific design the motor-generators process a maximum pull on the tethers during the power phase and can apply a maximum pull to the tethers during the depower phase. This also applies to the tethers, whose tensile strength can be optimised, i.e. limited, e.g. with respect to their weight. Furthermore, when applying this method the respective maximum possible power based on the technical components, e.g. with regard to gusty weather conditions etc., is only approximately or essentially achieved because they only rarely achieve and maintain the theoretical maximum in practical operation.

The applicant has found that maximising the average power can be achieved by controlling the reel in speed $v_{in}$ and the reel out speed $v_{out}$, i.e. so that the ratio of $v_{in}$ to $v_{out}$ is set to a defined value in the power phase during a cycle (in this case by suitable control of the motor-generators 8, 9). The reel in speed during this preferably lies in the range between three times to six times, particularly preferably between four times and six times and very preferably between four and a half times to five and a half times the reel out speed.

Because the reel out distance equals the reel in distance, said method results in a temporal division of the cycle into the power phase and the depower phase, so that, in contrast to the prior art, maximising the power is carried out by the mutual adaptation of both the power phase and the depower phase.

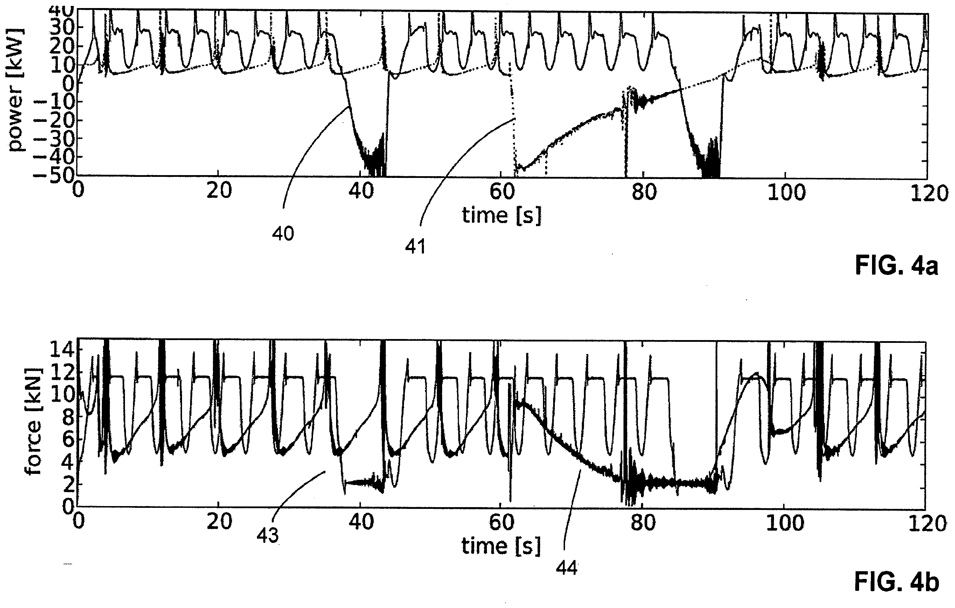

In the prior art the power phase is optimised in relation to very high energy generation and then the depower phase is carried out with a very low retraction force without consideration of the time required, so that the cycle time results from the temporally independent time periods for the power phase and for the depower phase. It is advantageous with the method according to the invention that the energy recovered during the cycle that lasts "as long as necessary" cannot be maximised, but the average power during the cycle can be maximised, so that as a result the energy recovered for a given time period (which is preferably an extended operating phase with many cycles) is considerably higher for the use of the method according to the invention. In the exemplary embodiment according to Figures 3a to 3c and 4a to 4e, the energy yield is more than a factor of 4 higher than in the prior art.

Of course, the cycle can be exercised under different conditions, which also depends on how closely the respective system can be operated to its structural strength with sufficiently high wind speed. The maximised average power over the cycle can be further maximised if in addition the reel out speed is 0.2 to 0.33 times the wind speed. Preferably, said reel out speed is multiplied by a factor depending on the angle of inclination in a vertical plane of the tethers relative to the ground, which particularly preferably essentially corresponds to the value of the cosine of the inclination angle.

If the maximum power for a specific system is to be achieved, in addition for a reel out speed predetermined as explained above the angle of attack of the flying object is set such that its lift (here: the force introduced into the tethers) is essentially maximised, wherein preferably for a predetermined reel in speed the angle of attack is adjusted such that the lift (here: the force introduced into the tethers resulting from lift and resistance) of the flying object is essentially minimised. Despite the minimised angle of attack (still for sufficient manoeuvrability with very low lift) the necessary retraction force can reach high values because the tension force of the flying object reaches high values with the reel in speed being up to six times the reel out speed.

It should be noted at this point that the method for maximising the average power recovered over a cycle can be carried out with any controllable flying object that comprises a stiff airfoil. However, a flying object with a stiff airfoil that is rolled by means of tethers for manoeuvring is preferable.

The controller 13 of the system 1 (Figure 1) for controlling the reel out speed and the reel in speed over a flight cycle is designed such that the reel in speed is set in a range of three times to six times, preferably four times to six times and particularly preferably four and a half times to five and a half times the reel out speed.

With one preferred embodiment, the controller 13 of the system 1 (Figure 1) is designed for controlling the reel out speed such that the reel out speed is set to 0.2 times to 0.33 times the wind speed, preferably multiplied by a factor for the angle of inclination of the tethers relative to the ground, which is particularly preferably set to a value that essentially corresponds to the cosine of the inclination angle.

Furthermore, the controller 13 of the system 1 (Figure 1) is preferably designed to control means for changing the angle of attack in the flying object such that during operation the flying object flies a depower phase with predetermined flight path.

Furthermore, the controller 13 of the system 1 (Figure 1) is preferably designed to control a device for the angle compensation of the actuating device of the system 1 such that a differential movement of the tethers because of a lateral deflection of the tethers relative to the ground station is changed, preferably compensated.

Furthermore, the controller 13 of the system 1 (Figure 1) is preferably designed to control the actuating device such that the same produces differential movements of the tethers such that the tethered flying object follows a predetermined flight path, wherein a respective tether can preferably be released faster relative to the other tether for the duration of a roll movement related to a current turn that is to be flown.

With one preferred embodiment of the present invention, the reel out speed ($v_{out}$) and the reel in speed ($v_{in}$) are further optimised by seeking very precise values for the ratio of said speeds, i.e. the recoverable average power of the system can be increased still further compared to operation in the above-mentioned ranges of the ratio of the reel out speed ($v_{out}$) to the reel in speed ($v_{in}$).

For this purpose, in a first step a value for a flying object coefficient $K = F_{out}/F_{in}$ for the specific flying object to be flown is determined by flying a cycle in an experiment and determining the traction force $T_{out}$ on the tethers of the flying object achievable for maximum lift in the power phase, as well as the retraction force $T_{in}$ to be applied to the tethers by the ground station that occurs if the angle of attack is set to be as small as possible in order to ensure the necessary manoeuvrability during flight in the depower phase (e.g. with a safety factor to be determined in the specific case).

The values for the traction force $T_{out}$ and the retraction force $T_{in}$ used in the coefficient equations for $F_{out}$ and for $F_{in}$:

$$F_{out} = \frac{T_{out}}{\frac{1}{2}\rho v_w^2 A} \, ;$$

$$F_{in} = \frac{T_{in}}{\frac{1}{2}\rho v_w^2 A} \, ;$$

wherein p is the air density, $v_w$ is the wind speed and A is the area of the flying object.

Thus the dimensionless flying object coefficient K can be formed:

$$K = \frac{F_{out}}{F_{in}}$$

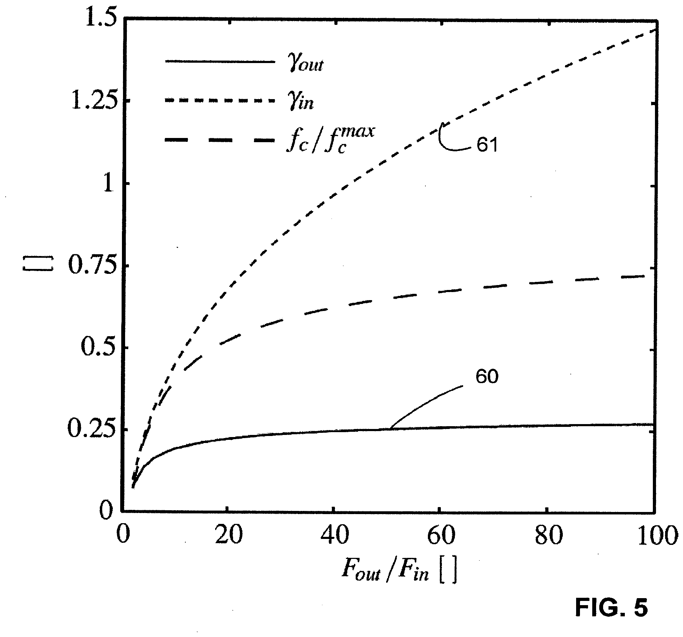

In the characteristic curve diagram according to Figure 5 the values for K are plotted on the horizontal axis, those for the coefficients $\gamma_{in}$ (curve 61 in the characteristic curve diagram of Figure 5) and $\gamma_{out}$ (curve 60 in the characteristic curve diagram of Figure 5) are plotted on the vertical axis. Said characteristic curve diagram contains the correct values that can be used for the real experiment.

With

$$\gamma_{out} = \frac{v_{out}}{v_w} , \gamma_{in} = \frac{v_{in}}{v_w} ,$$

the reel in speed ($v_{in}$) and the reel out speed ($v_{out}$) necessary for power maximisation can be determined because the wind speed $v_w$ is known.

Under real conditions the reel in speed ($v_{in}$) and the reel out speed ($v_{out}$) that are relatively accurately determined in this way can be improved during operation as follows:

The average power in the whole cycle changes more sensitively for a change of the reel out speed ($v_{out}$) than for a change of the reel in speed ($v_{in}$). Accordingly, the flight is flown with the speeds determined as above, and during a power phase the reel out speed ($v_{out}$) is varied and changes in the direction of improved power until a maximum value occurs (i.e. the power reduces again during the power phase for a reel out speed ($v_{out}$) that changes further in the same direction). With said improved reel out speed ($v_{out}$), the reel in speed ($v_{in}$) is then likewise varied and changed in the direction of the average power that is once again improved over the cycle until a maximum value exists in this respect.

Said steps can be repeated until a further power increase is no longer desired, for example because of the design boundary conditions of the system, or the power can only be marginally increased further.

It should be noted here that in principle the ratio of reel out speed ($v_{out}$) and reel in speed ($v_{in}$) found in this way applies for any wind speed, but by the nature of things this cannot be maintained if structural problems occur in the ground station (e.g. limited performance of the generators), in the tethers (e.g. limited tensile strength) or in the flying object because of the forces acting during operation. As a remedy for this either the angle of attack of the flying object can be changed so that a smaller traction force is introduced into the tethers or, with the same result, the flying object is flown at the edge of the wind window. Even if maintaining the ratio of reel out speed ($v_{out}$) to reel in speed ($v_{in}$) as described above can no longer be achieved (for the structural reasons mentioned), according to the invention the then achievable average power over a cycle can still be maximised as above by means of the ratio of reel out speed ($v_{out}$) to reel in speed ($v_{in}$). The values for said ratio can then be determined by the person skilled in the art, e.g. by flight trials or by numerical simulations.

Figures 4a to 4c show, for illustration of the above-mentioned method according to the invention and of the design and operation of the ground station according to the invention and of the flying object according to the invention, diagrams of realistic simulated turns over two flight cycles of the flying object according to the invention and over a cycle of the compared kite according to the prior art, wherein the flying object according to the invention and the kite according to the prior art have the dimensions specified above before the description for Figure 3a.

The wind speed assumed for the simulation is 6 m/s.

In Figure 4a the recovered power and the power consumed by the flying object can be seen in curve 40, while those of the kite according to the prior art can be seen in curve 41. It is apparent that the cycle of the flying object according to the invention lasts approx. 45 s and that of the kite according to the prior art lasts approx. 90 s. The average power of the flying object according to the invention is 13.9 kW and that of the kite according to the prior art is 2.8 kW, so that the usable power of the flying object with a stiff airfoil, operated according to the method according to the invention, is improved compared to the kite according to the prior art by a factor of 4.9.

The peaks of the power curves (as for those of the curves in the other diagrams) are attributable to the transmission characteristics, especially of the tethers and of the flying object with regard to the force introduced into the drums. In particular, the inevitable sagging of the tethers in combination with their elasticity, results in noticeable dynamics if the reel out speed or the reel in speed is changed.

The force introduced into the ground station by means of the tethers by the flying object with a stiff airfoil operated according to the invention is shown in Figure 4b by curve 43 and the force of the kite according to the prior art is shown by curve 44.

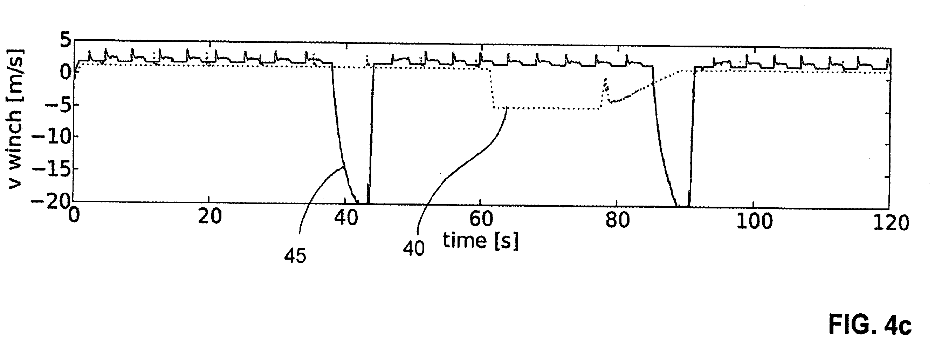

Figure 4c shows curve 45 relating to the reel out speed and the reel in speed of the flying object operated according to the invention and, in comparison with this, curve 46 of the kite according to the prior art. It is particularly evident here how, according to the method according to the invention, the reel in speed is significantly increased compared to the reel in speed of the prior art. Again the fluctuations and peaks in the curves in the reel in speed are attributable to the dynamics, especially of the tethers, in connection with sharply turning flight (lying figure of eight). It is apparent that the reel out speed deflects almost uniformly about its nominal value.

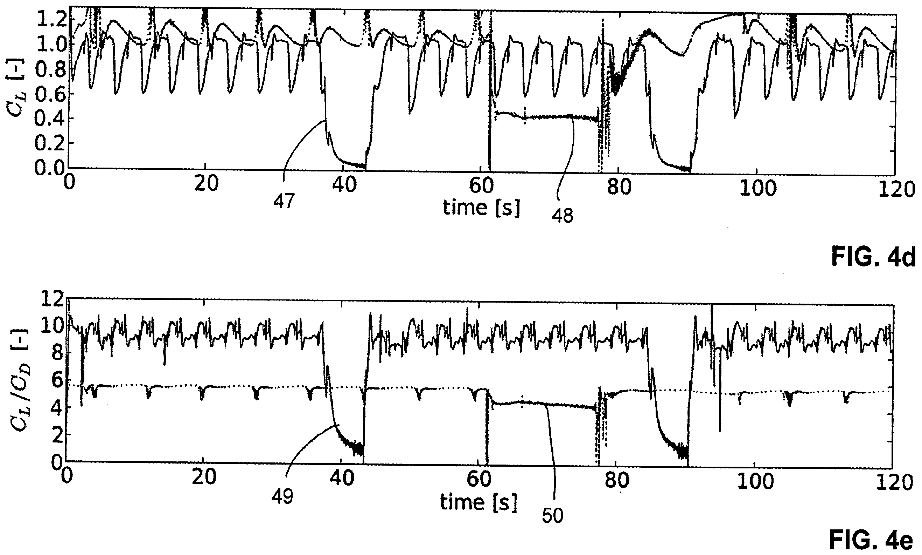

Figure 4d shows the coefficients of lift $C_L$ of the flying object with a stiff airfoil operated according to the invention in curve 47 and of the kite according to the prior art in curve 48. It is apparent how curve 47 falls almost to zero during the depower phase (from approx. second 38 to approx. second 43), while curve 48 (approx. second 61 to second 78) still has a significant value of approx. 0.5 during the depower phase of the kite.

Figure 4e shows the profile of the dimensionless factor formed from the ratio of the coefficient of lift $C_L$ and of the coefficient of drag $C_D$ (L = lift, D = drag) of the flying object with a stiff airfoil operated according to the invention in curve 49 and those of the kite according to the prior art in curve 50.

In addition the following information should be recorded, which is described with respect to kites, but can straightforwardly be transferred to and used with tethered flying objects having a stiff airfoil:

1 Introduction

Simple analytical models are crucial to understand the behavior of a physical system. In his seminal paper entitled Crosswind Kite Power [1], Miles Loyd described more than 30 years ago the fundamental behavior of a kite flying cross wind and presented methods to harness the wind energy with such kites. In this analysis the kite is treated as a wing which is basically characterized by the wing area A and the lift and drag coefficients $C_L$ and $C_D$.

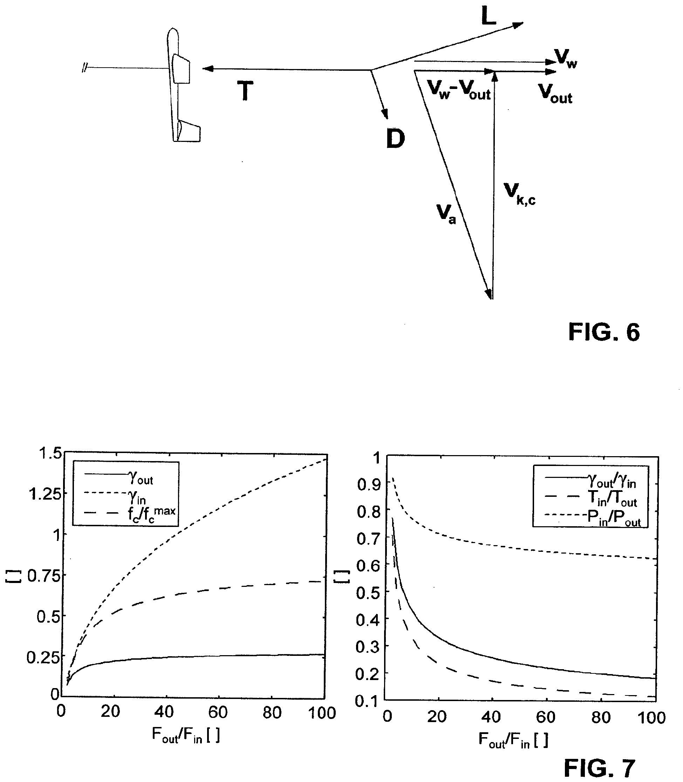

Following Loyd, the lift L, drag D and tether force T are shown for a kite with the crosswind speed $v_{k,c}$ in Figure 6. The wind speed is $v_w$ and the reel out speed of the tether in the traction phase of a pumping cycle is $v_{out}$. For high lift to drag ratios the apparent wind speed $v_a$ is approximately equal to $v_{k,c}$ and one obtains

$$v_a \cong v_{k,c} = (v_w - v_{out})C_L/C_D \qquad (1)$$

A first important result is that the speed of a kite flying crosswind is proportional to the lift to drag ratio of the wing and can thus be much higher than the speed of the wind. The reel out speed of the tether $v_{out}$ in the power phase reduces both the kite speed and the apparent wind speed. Obviously, $v_{out}$ cannot be larger than $v_w$.

The tether force T is for high $C_L/C_D$ to a good approximation equal to the lift force L which is given by the density of air $\rho$, the wing area, the lift coefficient and the apparent wind speed

$$T \cong L = \frac{1}{2}\rho v_a{}^2 A C_L \qquad (2)$$

The mechanical power P produced in the traction phase of a pumping cycle is then given by

$$P = T v_{out} \qquad (3)$$

It follows from Eqs. (1) and (2) that the smaller the reel out speed the larger the tether force. On the other hand no mechanical power is generated for zero reel out speed (Eq. (3)) as well as for a reel out speed equal to the wind speed (Eqs. (1) and (2)). Thus, the second important result from Loyd's analysis is that there is an optimal reel out speed $v_{out,opt}$ where the produced mechanical power is maximal. It is given by

$$v_{out,opt} = 1/3 \, v_w \qquad (4)$$

The maximal mechanical power in the traction phase is then

$$P = \frac{1}{2}\rho v_w{}^3 A \, \frac{4}{27}\frac{C_L{}^3}{C_D{}^2} \qquad (5)$$

Loyd [1] has also shown that this power is a factor $\frac{1}{2}(C_L/C_D)^2$ larger than what could be maximally produced with a simple kite (a kite not flying crosswind) which makes a difference of one to two orders of magnitude depending on $C_L/C_L$ of the wing. The simple analysis emphasizes the importance of flying crosswind and the crucial role of $C_L/C_D$ of the wing.

Loyd's analysis can be viewed as an upper bound for a pumping kite power system, as it does not describe the retraction phase. Some work on the cycle power has been published for special kite power systems ([2] - [4]). Here we generalize Loyd's cross wind power theory to pumping cycle kite power systems. In particular, we optimize the cycle power by taking both the traction phase and the retraction phase into account (Sec. 2). The influence of the kite efficiency on the capacity factor and the annual produced energy is investigated in Sec. 3 while the role of the tether elevation angle is considered in Sec. 4. Some aspects of the kite mass are discussed in Sec. 5. Other simplifications remain. The drag of the tether is neglected, which, however, can be added to the drag of the kite. Gravitational forces are also neglected and $C_L$ and $C_D$ are considered to be constant during the traction phase and the retraction phase. The full dynamics of the kite flying is left out. These aspects can be taken into account with numerical models. A number of such models have been developed ranging from point mass models [1] and [5], rigid body models with a simplified aerodynamic description of the kite and tether [6] to models taking the detailed shape, physics and dynamics of the wing and tether into account which is beyond the scope of this article.

## 2 Maximal Pumping Cycle Power

### 2.1 Optimal reel out and reel in speed with no force and power constraint

We consider a full pumping cycle with a traction or reel out phase and a retraction or reel in phase. The goal is to determine the reel out speed $v_{out}$ and the reel in speed $v_{in}$ where the average mechanical power over one pumping cycle $P_c$ is maximal. Defining the dimensionless factor $\gamma_{out}$ by $v_{out} = \gamma_{out} v_w$, the tether force in the traction phase is (Eqs. (1) and (2))

$$T_{out} = \frac{1}{2}\rho v_w{}^2 A(1 - \gamma_{out})^2 F_{out} \qquad (6)$$

with the dimensionless force factor $F_{out}$

$$F_{out} = \frac{C_L{}^3}{C_D{}^2} \qquad (7)$$

Similarly, the tether force in the retraction phase is given by

$$T_{in} = \frac{1}{2}\rho v_w{}^2 A(1 + \gamma_{in})^2 F_{in} \qquad (8)$$

with the dimensionless quantity $\gamma_{in}$ defined by $v_{in} = \gamma_{in} v_w$ and the dimensionless force factor $F_{in}$. Ideally, one can assume that only the drag of the kite needs to be compensated in the reel in phase, thus

$$F_{in} = C_D \qquad (9)$$

However, in practice $F_{in}$ is determined by the minimal tether force needed to reel in the kite in a controlled way which can be considerably more than the kite drag. $F_{out}$ and $F_{in}$ can be easily experimentally determined by measuring the tether force at a given wind speed either flying crosswind or in the retraction phase. In contrast, the lift and drag coefficients are very difficult to measure for a flying kite since they sensitively depend on the direction of the apparent wind speed with respect to the orientation of the kite. As the following analysis shows, $F_{in}$ and $F_{out}$ are ideally suited to characterize the efficiency of the wing for a pumping cycle kite power system.

Assuming a change of the tether length during the power cycle $l_c$, the produced energy over one power cycle $E_c$ is

$$E_c = (T_{out} - T_{in})l_c = \frac{1}{2}\rho v_w{}^2 A((1 - \gamma_{out})^2 F_{out} - (1 + \gamma_{in})^2 F_{in})l_c \qquad (10)$$

and the duration of the cycle $t_c$ is

$$t_c = \frac{l_c}{v_{out}} + \frac{l_c}{v_{in}} = \frac{l_c}{v_w}\left(\frac{\gamma_{out}\gamma_{in}}{\gamma_{out} + \gamma_{in}}\right) \qquad (11)$$

The average power over one cycle is

$$P_c = \frac{E_c}{t_c} = P_w A(F_{out}(1 - \gamma_{out})^2 - F_{in}(1 + \gamma_{in})^2)\left(\frac{\gamma_{out}\gamma_{in}}{\gamma_{out} + \gamma_{in}}\right) \qquad (12)$$

which can be normalized as

$$\frac{P_c}{P_w A F_{out}} = f_c = \left( (1 - \gamma_{out})^2 - \frac{F_{in}}{F_{out}} (1 + \gamma_{in})^2 \right) \left( \frac{\gamma_{out}\gamma_{in}}{\gamma_{out} + \gamma_{in}} \right) \qquad (13)$$

where the power density of the wind $P_w$

$$P_w = \frac{1}{2} \rho v_w^3 \qquad (14)$$

and the power factor $f_c$ have been introduced.

It can easily be shown that reeling in without resistance at infinite speed ($F_{in} = 0$, $\gamma_{in} \to -\infty$) leads to $\gamma_{in} = 1/3$ for maximal power with

$$f_c^{max} = \max_{\gamma_{out}} \left\{ \frac{P_c}{P_w A F_{out}} \right\} = \frac{4}{27} \qquad (15)$$

which corresponds to the result of Eq. (5).

The numerical results for the maximal cycle power for general force factors $F_{out}, F_{in} > 0$

$$f_c = \max_{\gamma_{out},\gamma_{in}} \left\{ \left( (1 - \gamma_{out})^2 - \frac{F_{in}}{F_{out}} (1 + \gamma_{in})^2 \right) \left( \frac{\gamma_{out}\gamma_{in}}{\gamma_{out} + \gamma_{in}} \right) \right\} \qquad (16)$$

are shown in Figure 7. Note that according to Eq. (16) the optimal reel out and reel in speeds only depend on the ratio $F_{out}/F_{In}$ and not on the absolute values of the force factors.

For $F_{out}/F_{in} = 100$ the optimal reel out speed is close to 1/4 times the wind speed and considerably smaller than predicted by the Loyd's model. The optimal reel in speed is about 1.5 times the wind speed and 73 % of the maximal power (Eq. (5)) can be obtained at $F_{out}/F_{in} = 100$. The reel in speed is thus about 5.4 times higher than the reel out speed, or, in other words, the traction phase lasts about 5.4 times longer than the retraction phase. Despite the high value of $F_{out}/F_{in}$, due to the high reel in speed the tether force in the traction phase is only about 8.7 times higher than the tether force in the reel in phase. The power is even more balanced. The mechanical power needed in the retraction phase in order to generate the optimal cycle power is about 63 % of the mechanical power generated in the traction phase. The maximal cycle power is obtained by reeling in fast with high power and thus keeping the time where no energy is produced minimal.

2.2 Limiting power

The optimal reel in and reel out speed determined above are independent of the wind speed. However, at some wind speed $v_n$ the kite power system reaches its nominal power $P_{out}^n$. Let us assume that the nominal force $T_{out}^n$ is reached at the same wind speed. For wind speeds higher than $v_n$ both the tether force and the reel out power cannot increase further and must be kept constant. Due to the relation between tether force and power the reel out speed (Eq. (3)) must then also be kept constant and only the reel in speed can still be optimized. For $v_w \leq v_n$, $\gamma_{out}$ and $\gamma_{in}$ are independent of the wind speed and given by Eq. (16). They are renamed as $\gamma_{out}^n$ and $\gamma_{in}^n$. At $v_w = v_n$, we obtain:

$$v_{out}^n = \gamma_{out}^n v_n \qquad (17)$$

$$T_{out}^n = \frac{1}{2} \rho v_n^2 A (1 - \gamma_{out}^n)^2 F_{out} \qquad (18)$$

$$P_{out}^n = T_{out}^n v_{out}^n \qquad (19)$$

For $v_w > v_n$ following the procedure of Eqs. (10) - (13) one obtains with $E_c = (T_{out}^n - T_{in})l_c$, $\quad t_c = \frac{l_c}{v_{out}^n} + \frac{l_c}{v_{in}}$ and

$P_c = E_c/t_c$

$$\frac{P_c}{P_w A F_{out}} = f_{c,\mu} = \max_{\gamma_{in}} \left\{ \left( \frac{1}{\mu^2} (1 - \gamma_{out}^n)^2 - \frac{F_{in}}{F_{out}} (1 + \gamma_{in})^2 \right) \left( \frac{\gamma_{out}^n \gamma_{in}}{\gamma_{out}^n + \mu \gamma_{in}} \right) \right\} \qquad (20)$$

where the dimensionless velocity parameter

$$\mu = \frac{v_w}{v_n} \geq 1 \qquad (21)$$

has been introduced.

The tether force and power in the traction phase are kept constant at their nominal value for wind speeds above nominal wind speed by adjustment of $F_{out}$, or, in other words, by reduction of $C_L$.

One finds for $\mu > 1$

$$F_{out,\mu} = \frac{F_{out}}{\mu^2} \frac{(1 - \gamma_{out}^n)^2}{(1 - \gamma_{out}^n/\mu)^2}, \qquad \gamma_{out} = \frac{\gamma_{out}^n}{\mu} \qquad (22)$$

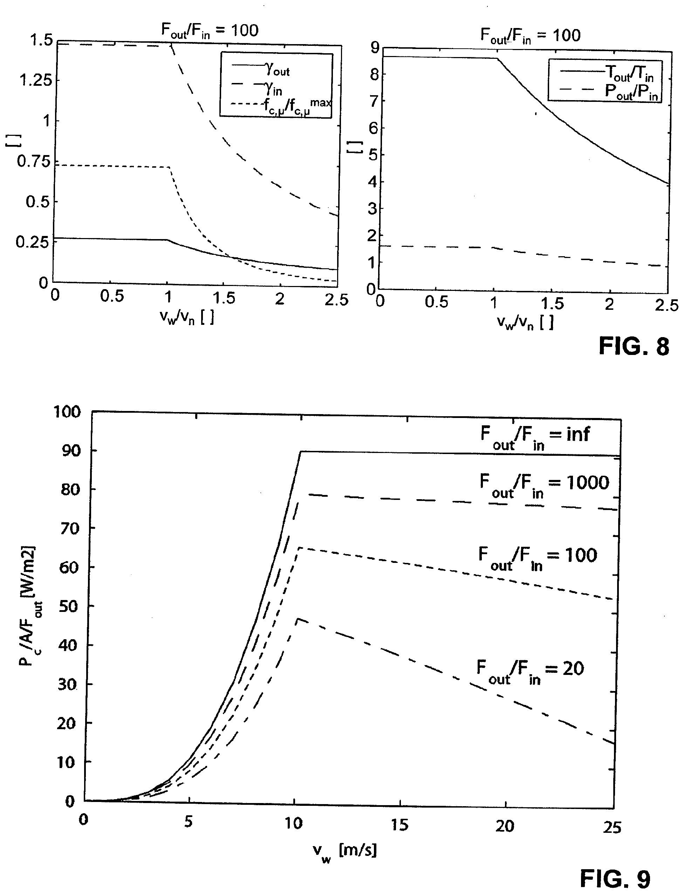

The result of Eq. (20) is shown in Figure 8 for $F_{out}/F_{in} = 100$. The reel in speed needs to be reduced for wind speeds above nominal wind speed so that the retraction power is not getting too large. Still, the retraction power almost reaches the nominal power $P_{out}^n$ at $v_w/v_n = 2.5$ as can be seen in Figure 8 (right).

The power curve representing the average mechanical power over one cycle of the pumping kite power system at a given wind speed is defined by:

$$0 \leq v_w \leq v_n:$$

$$\frac{P_c}{A F_{out}} = P_w \max_{\gamma_{out}, \gamma_{in}} \left\{ \left( (1 - \gamma_{out})^2 - \frac{F_{in}}{F_{out}} (1 + \gamma_{in})^2 \right) \left( \frac{\gamma_{out} \gamma_{in}}{\gamma_{out} + \gamma_{in}} \right) \right\} \qquad (23)$$

$v_n < v_w :$

$$v_n < v_w:$$

$$\frac{P_c}{A F_{out}} = P_w \max_{\gamma_{in}} \left\{ \left( \frac{1}{\mu^2} (1 - \gamma_{out}^n)^2 - \frac{F_{in}}{F_{out}} (1 + \gamma_{in})^2 \right) \left( \frac{\gamma_{out}^n \gamma_{in}}{\gamma_{out}^n + \mu \gamma_{in}} \right) \right\} \qquad (24)$$

The power curve is shown in Figure 9 for different values of $F_{out}/F_{in}$. The nominal wind speed is set to 10 m/s. For low $F_{out}/F_{in}$ the cycle power drops considerably for wind speeds above the nominal wind speed. This is due to the fact that the traction power is kept constant above nominal wind speed while the retraction power further increases with increasing wind speed.

2.3 Limiting tether force

A different approach to limit the tether force to a nominal value is to increase the reel out speed above the optimal value. This can be an interesting solution in a kite power system where the nominal force is the major cost driving factor and not the nominal power.

For $v_w > v_n$, the reel out speed can be determined by

$$T_{out}^n = \frac{1}{2}\rho v_n{}^2 A(1 - \gamma_{out}^n)^2 F_{out} = \frac{1}{2}\rho v_w{}^2 A(1 - \gamma_{out})^2 F_{out} = const. \quad (25)$$

leading with Eq. (21) to

$$\gamma_{out} = 1 - \frac{1 - \gamma_{out}^n}{\mu} \quad (26)$$

$$v_{out} = v_w - v_n + \gamma_{out}^n v_n \quad (27)$$

$$P_{out} = T_{out}^n v_{out} \quad (28)$$

With $E_c = (T_{out}^n - T_{in})l_c$, $t_c = \frac{l_c}{v_{out}} + \frac{l_c}{v_{in}}$ and $P_c = E_c/t_c$ one obtains

$$\frac{P_c}{P_w A F_{out}} = \max_{\gamma_{in}}\left\{\left(\frac{1}{\mu^2}(1 - \gamma_{out}^n)^2 \right.\right.$$
$$\left.\left. -\frac{F_{in}}{F_{out}}(1 + \gamma_{in})^2\right)\frac{\gamma_{in}(\mu - 1 + \gamma_{out}^n)}{\mu\gamma_{in} + \mu - 1 + \gamma_{out}^n}\right\} \quad (29)$$

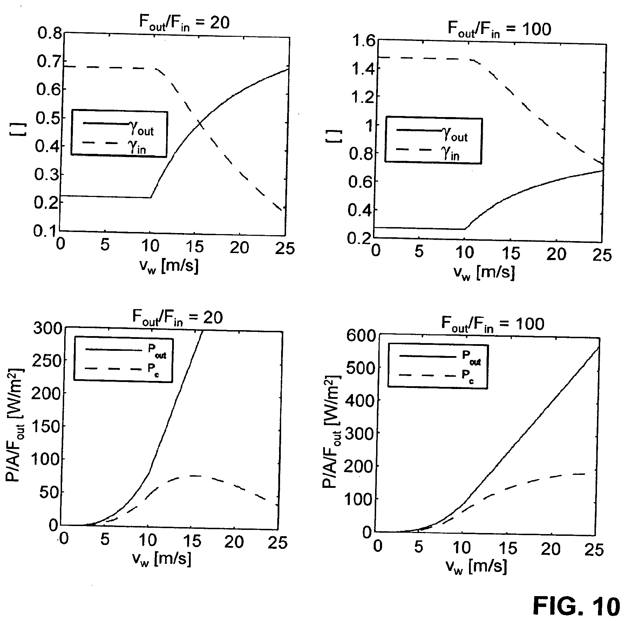

The reel out and reel in speed as well as the normalized power $P_c$ and $P_{out}$ are shown in Figure 10 for two values of $F_{out}/F_{in}$. The nominal wind speed $v_n$ where the maximal tether force is reached is 10 m/s. A fast increase of $\gamma_{out}$ is needed for $v_w > v_n$ in order to keep the tether force constant. $P_{out}$ increases linearly with the wind speed for $v_w > v_n$ while the cycle power $P_c$ increases much slower, reaches a maximum and starts to decline for very high wind speeds.

2.4 Limiting tether force and power: The 3 phase strategy

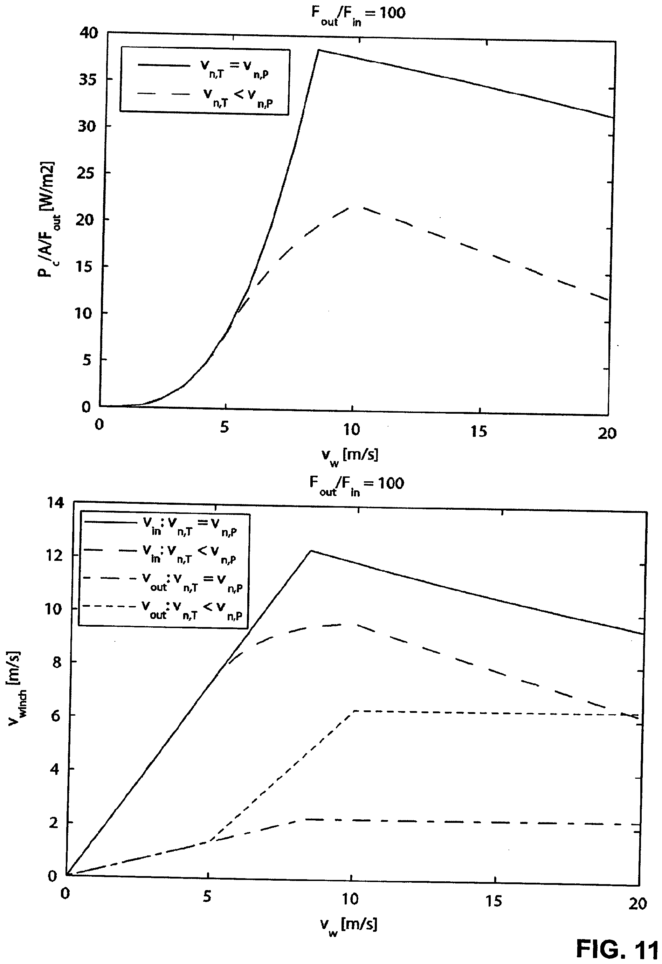

A strategy for pumping kite power systems is to divide the wind spectrum into three phases. For low wind speeds $0 \le v_w \le v_{n,T}$, there are no constrains for the tether force and generator power (Sec. 2.1). For medium winds $v_{n,T} \le v_w \le v_{n,P}$ the tether force is limited by a higher reel out speed while the power limit is not reached yet (Sec. 2.3). For high winds $v_{n,P} \le v_w$ the power limit and the tether force limit are reached (Sec. 2.2). In Figure 11 the 3 phase strategy with $v_{n,T} = 5$ m/s and $v_{n,P} = 10$ m/s is compared to the 2 phase strategy where $v_{n,T} = v_{n,P}$. The 2 phase strategy is identical to the results presented in Figure 9. The assumption that the maximum generator power $P_{out,max}/A/F_{out} = 51.6$ W/m² is identical for the 2 and the 3 phase strategy leads to $v_{n,T} = v_{n,P} = 8.36$ *m/s* for the 2 phase strategy. The cycle power is identical for both strategies for $v_w \le 5$ *m/s* (Figure 11, above) but increases faster for the 2 phase strategy for higher wind speeds. The maximal values are $P_{c,max}^2/A/F_{out} = 38.6$ W/m² at 8.36 m/s wind and $P_{c,max}^3/A/F_{out}$ = 22.1 W/m² at 10 m/s wind. The maximal reel out speed is obviously higher for the 3 phase strategy while the maximal reel in speed is slightly higher for the 2 phase strategy (Figure 11, bottom).

The higher cycle power of the 2 phase strategy can only be obtained for the price of a higher tether force. One obtains $T_{out,max}^2/A/F_{out} = 22.7$ N/m² and $T_{out,max}^3/A/F_{out} = 8.1$ N/m². A twice as high maximal cycle power can be obtained by a three times higher maximal tether force ($F_{out}/F_{in} = 100$). Which strategy is more economical depends on the costs of higher tether force and wing loading. Further, the influence of the increased tether drag on the power production needs to be taken into account in a more detailed study, too. Obviously, there is a subtle interplay between force, power and wind in pumping cycle kite power systems which needs to be carefully optimised.

$$V_{n,T} < V_{n,P} V_{n,T} = V_{n,P}$$

3. Average annual power

The wind speed driving the wing of the kite power system is far from constant. Thus, to estimate the average power of a kite power system over a longer time period, these wind variations need to be taken into account. The distribution of the wind speed can be well described in most locations by a Weibull probability density function (see e.g. [7])

$$g_W(v_w) = \frac{k}{v_m}\left(\frac{v_w}{v_m}\right)^{k-1} e^{-\left(\frac{v_w}{v_m}\right)^k} \tag{30}$$

which is defined by the two parameters k and $v_m$. Typical values for wind data for the parameter k are between 1.5 and 2. The average wind speed $v_{av}$ is given by

$$v_{av} = \int_0^\infty v_w\, g_W(v_w)dv_w = v_m\Gamma\left(1 + \frac{1}{k}\right) \tag{31}$$

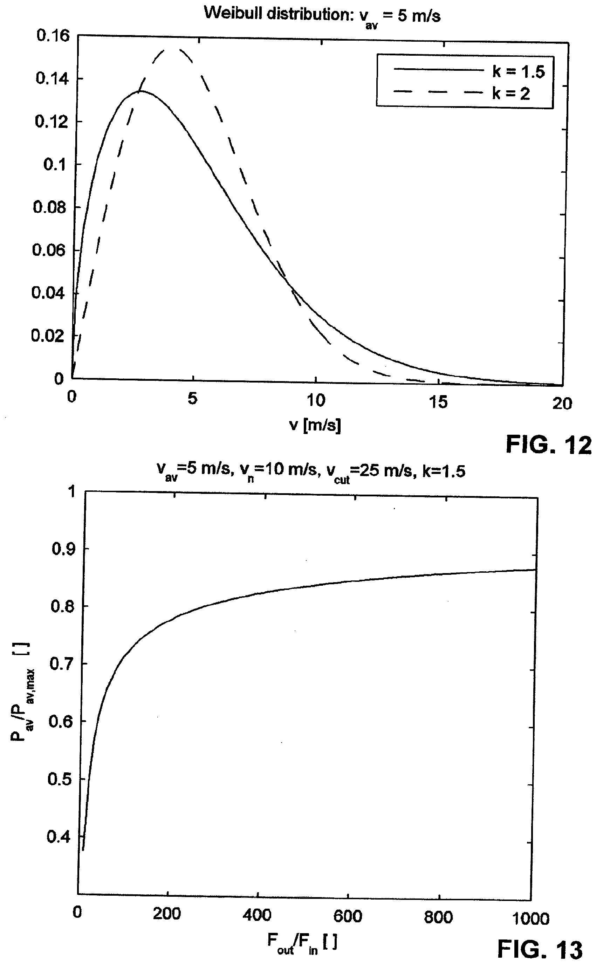

and is proportional to the parameter $v_m$. Thus, $v_m$ can be determined for a given $v_{av}$ once the value of the gamma function $\Gamma$ is known: for k = 1.5, $\Gamma\left(\frac{5}{3}\right) = 0.9027$, for k = 2, $\Gamma(1.5) = 0.5\sqrt{\pi} = 0.8826$. The Weibull probability density function for $v_{av}$ = 6 m/s is depicted in Figure 12 for k = 1.5 and k = 2.

The average annual power of a pumping kite power system is calculated by integration of the product of the cycle power and the wind distribution. For simplicity we consider here the 2 phase strategy with $v_{n,T} = v_{n,P} = v_n$. One obtains

$$P_{av} = \int_0^{v_n} P_w AF_{out} f_c g_W(v_w)dv_w + \int_{v_n}^{v_{cut}} P_w AF_{out} f_{c,\mu}\, g_W(v_w)dv_w \tag{32}$$

with $f_c$ and $f_{c,\mu}$ given by Eq. (16) and (20). The integration boundaries $v_n$ and $v_{cut}$ are the nominal wind speed and the cut-out wind speed. For $v_w > v_{cut}$ the power production is ceased.

The maximal average annual power (Fin = 0) is defined by

$$P_{av,max} = \frac{1}{2}\rho v_n^3 AF_{out} \frac{4}{27}\left(\frac{1}{v_n^3}\int_0^{v_n} v_w^3 g_W(v_w)dv_w + \int_{v_n}^{v_{cut}} g_W(v_w)dv_w\right) \tag{33}$$

The normalized average mechanical power for a wind distribution with $v_{av}$ = 5 m/s and k = 1.5 as a function of $F_{out}/F_{in}$ is shown in Figure 13. The normalized average power increases from 0.51 for $F_{out}/F_{in}$ = 20 to 0.72 for $F_{out}/F_{in}$ = 100 demonstrating the importance of a high force ratio of the wing.

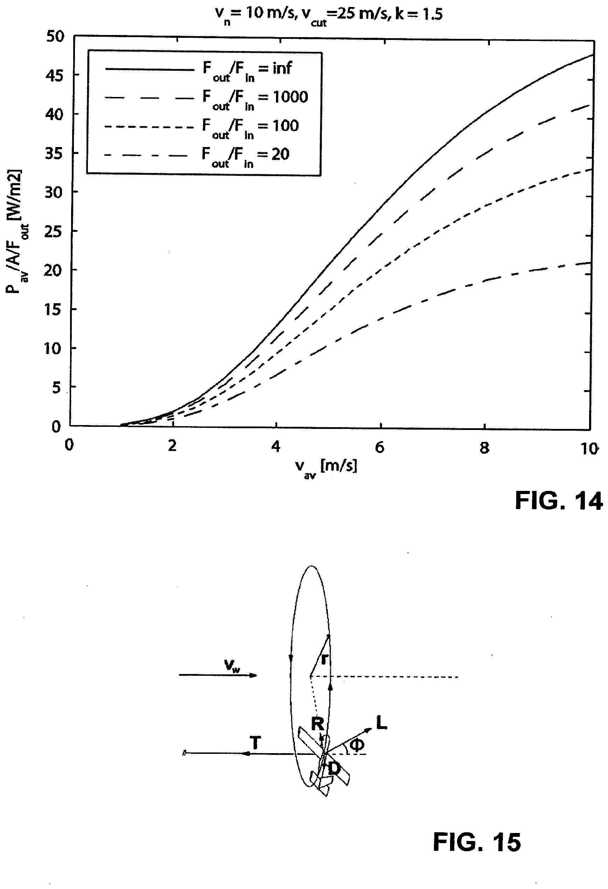

The average mechanical power as a function of the average wind speed is given in Figure 14. We obtain $P_{av}/A/F_{out}$ = 28.8 W/m² at $v_{av}$ = 8 m/s for $F_{out}/F_{in}$ = 100. With $F_{out}$ = 50, such a pumping kite power system produces over the year an average mechanical power of 1.4 kW/m². Taking the cycle power $P_c/A/F_{out}$ = 65.9 W/m² at $v_n$ as reference (Eq. (23)), a capacity factor for the mechanical power of 0.44 is obtained in this case. Note that the average power increases only with the third power of the average wind speed for very low average wind speeds and levels off when the average wind speed approaches the nominal wind speed of the kite power system.

The annual produced mechanical energy of the kite power system is the product of the average annual power times the number of hours of the year:

$$E_y = P_{av}\, 8760\, [kWh] \tag{34}$$

One obtains an annual energy production of 12'300 kWh/m$^2$ for the example given above.

4. Elevation angle of the tether

The model of Loyd and the extension to a pumping cycle system given above assume that the tether is parallel with the direction of the wind. This is in practice not feasible since the tether is anchored on the ground while the kite flies at some altitude above ground. The elevation angle $\theta$ of the tether with the horizontal wind direction has a large impact on the power production of a kite power system as the kite flies out of the power zone of the wind with increasing $\theta$. Assuming a right-handed coordinate system with the x-axis parallel to the wind direction and the z-axis pointing upwards, the velocity of the wind, the reel out speed and the cross wind velocity of the kite are given by

$$\boldsymbol{v_w} = \begin{pmatrix} v_w \\ 0 \\ 0 \end{pmatrix}, \quad \boldsymbol{v_{out}} = \begin{pmatrix} v_{out}\cos\theta \\ 0 \\ v_{out}\sin\theta \end{pmatrix}, \quad \boldsymbol{v_{k,c}} = \begin{pmatrix} 0 \\ v_{k,c} \\ 0 \end{pmatrix} \qquad (35)$$

The apparent wind in the power phase is

$$\boldsymbol{v_a} = \boldsymbol{v_w} - \boldsymbol{v_{out}} - \boldsymbol{v_{k,c}} = \begin{pmatrix} v_w - v_{out}\cos\theta \\ -v_{k,c} \\ -v_{out}\sin\theta \end{pmatrix},$$

$$v_a = \sqrt{v_w^2 - 2v_w v_{out}\cos\theta + v_{out}^2 + v_{k,c}^2} \qquad (36)$$

The tether, lift and drag forces are

$$\boldsymbol{T} = -T_{out}\frac{\boldsymbol{v_{out}}}{v_{out}}, \quad \boldsymbol{L} = L\boldsymbol{e}, \quad \boldsymbol{D} = D\frac{\boldsymbol{v_a}}{v_a}, \quad L = \frac{1}{2}\rho v_a^2 A C_L, \quad D = \frac{1}{2}\rho v_a^2 A C_D \qquad (37)$$

with $\boldsymbol{e}$ a unity vector defining the direction of the lift vector. Given $v_w$, $v_{out}$ and $\theta$, the five unknowns $v_c$, $T_{out}$, $e_x$, $e_y$, $e_z$ are defined by the five equations $\boldsymbol{L} + \boldsymbol{D} + \boldsymbol{T} = 0$, $\boldsymbol{L} \cdot \boldsymbol{D} = 0$, $|\boldsymbol{e}| = 1$.
The system of equations can be solved analytically. For $C_L/C_D \gg 1$ one obtains

$$v_a = v_w(\cos\theta - \gamma_{out})C_L/C_D \qquad (38)$$

$$T_{out} = \frac{1}{2}\rho v_w^2 A(\cos\theta - \gamma_{out})^2 F_{out} \qquad (39)$$

with $F_{out}$ defined in Eq. (7). A similar equation for the tether force was presented in Ref. [8]. For the retraction phase with

$$\boldsymbol{v_{in}} = \begin{pmatrix} -v_{in}\cos\theta \\ 0 \\ -v_{in}\sin\theta \end{pmatrix} \qquad (40)$$

one obtains the apparent wind speed

$$\boldsymbol{v_a} = \boldsymbol{v_w} - \boldsymbol{v_{in}} = \begin{pmatrix} v_w + v_{in}\cos\theta \\ 0 \\ v_{in}\sin\theta \end{pmatrix}, \quad v_a = \sqrt{v_w^2 + 2v_w v_{in}\cos\theta + v_{in}^2} \qquad (41)$$

For $T_{in} \cong D$ the retraction tether force is

$$T_{in} = \frac{1}{2}\rho v_w{}^2 A(1 + 2\gamma_{in}\cos\theta + \gamma_{in}{}^2)F_{in} \qquad\qquad (42)$$

Following the procedure of Eqs. (10) - (12) the cycle power is

$$\frac{P_c}{P_w A F_{out}} = \left((\cos\theta - \gamma_{out})^2 - \frac{F_{in}}{F_{out}}(\gamma_{in}{}^2 + 2\cos\theta\gamma_{in} + 1)\right)\left(\frac{\gamma_{out}\gamma_{in}}{\gamma_{out} + \gamma_{in}}\right) \quad (43)$$

For Fin = 0, $\gamma_{in} \to \infty$ one obtains the optimal reel out speed

$$\frac{d}{d\gamma_{out}}\frac{P_c}{P_w A F_{out}} = \frac{d}{d\gamma_{out}}(\cos\theta - \gamma_{out})^2\gamma_{out} = 0 \leftrightarrow \gamma_{out} = \frac{1}{3}\cos\theta \quad (44)$$

and the maximal cycle power

$$P_c^{max} = P_w A F_{out}\frac{4}{27}\cos^3\theta \qquad\qquad (45)$$

This result was established in a more general approach taking the tether drag into account by Argatov et al. [10]. The power curve is given (Eqs. (23) and (24))

$$0 \leq v_w \leq v_n:$$

$$\frac{P_c}{A F_{out}} = P_w \max_{\gamma_{out},\gamma_{in}}\left\{\left((\cos\theta - \gamma_{out})^2\right.\right.$$
$$\left.\left. - \frac{F_{in}}{F_{out}}(\gamma_{in}{}^2 + 2\cos\theta\gamma_{in} + 1)\right)\left(\frac{\gamma_{out}\gamma_{in}}{\gamma_{out} + \gamma_{in}}\right)\right\} \qquad (46)$$

$$v_n < v_w:$$

$$\frac{P_c}{A F_{out}} = P_w \max_{\gamma_{in}}\left\{\left(\frac{1}{\mu^2}(\cos\theta - \gamma_{out}^n)^2\right.\right.$$
$$\left.\left. - \frac{F_{in}}{F_{out}}(\gamma_{in}{}^2 + 2\cos\theta\gamma_{in} + 1)\right)\left(\frac{\gamma_{out}^n\gamma_{in}}{\gamma_{out}^n + \mu\gamma_{in}}\right)\right\} \qquad (47)$$

Numerical simulations reveal that for $\theta$ up to about 45° the influence of $\theta$ is well approximated by

$$\gamma_{out}^\theta = \gamma_{out}^{\theta=0}\cos\theta, \qquad \gamma_{in}^\theta = \gamma_{in}^{\theta=0}\cos\theta, \quad P_c^\theta = P_c^{\theta=0}\cos^3\theta, \quad P_{av}^\theta = P_{av}^{\theta=0}\cos^3\theta \quad (48)$$

The elevation angle has a strong influence on the produced power of a kite power system. For $\theta$ = 30° the power is reduced to 65 % while for $\theta$ = 45° only 35 % of the power corresponding to $\theta$ = 0° can be obtained. In order to determine the optimal elevation angle both the increase of the wind speed with increasing altitude as well as the increase of the tether drag with increasing tether length need to be taken into account [9]. In practise, an angle in the order of $\theta$ = 30° seems to be a good compromise. On the other hand, high elevation angles can be used to limit the power and tether force at very high winds or to park the kite under a storm.

### 5. Flying circles: the role of the kite mass

The role of the kite mass in a kite power system is not easy to investigate with simple models since the mass is coupled to the dynamics of the system. In general it is often assumed that the mass is small and thus can be neglected. Nevertheless, with the introduction of rigid wing structures in kite power this might not hold true anymore. In a recent study the dynamics of a kite flying a closed loop spherical trajectory has been investigated by means of asymptotic modeling [11]. Here we present a simple model to shed some light on the role of the kite mass m in kite power. Assuming that the kite flies a circle with radius r, the resulting force **R** must be the centripetal force pointing towards the center of the circle. Such a resulting force can be obtained by "leaning" the kite into the circle with a corresponding roll angle Φ resulting in a component of the lift towards the circle center (Figure 15).

One obtains

$$L \sin \Phi = m \frac{v_{k,c}^2}{r} \qquad (49)$$

and with $v_a \cong v_{k,c}$

$$\sin \Phi = \frac{r_{min}}{r} \ , \qquad r_{min} = \frac{m}{A} \frac{2}{\rho C_L} \qquad (50)$$

where $r_{min}$ is the minimal radius the kite can fly (corresponding to Φ = π/2). The projection of the inclined lift into the plane of T and D of Figure 6 is $L \cos \Phi$. Thus,

$$v_a = (v_w - v_{out}) C_L \cos \Phi / C_D \qquad (51)$$

With $T \cong L \cos \Phi$ and $\cos \Phi = \sqrt{1 - \sin \Phi^2}$ one obtains

$$T_{out} = \frac{1}{2} \rho v_w^2 A (1 - \gamma_{out})^2 F_{out} \left(1 - \left(\frac{r_{min}}{r}\right)^2\right)^{3/2} \qquad (52)$$

Following the procedure of Eqs. (10) - (16), the optimal cycle power can be easily derived. Here, we only consider the case $F_{in} = 0$, $\gamma_{in} \to \infty$ which yields

$$P_c^{max} = P_w A F_{out} \frac{4}{27} \left(1 - \left(\frac{r_{min}}{r}\right)^2\right)^{3/2} \qquad (53)$$

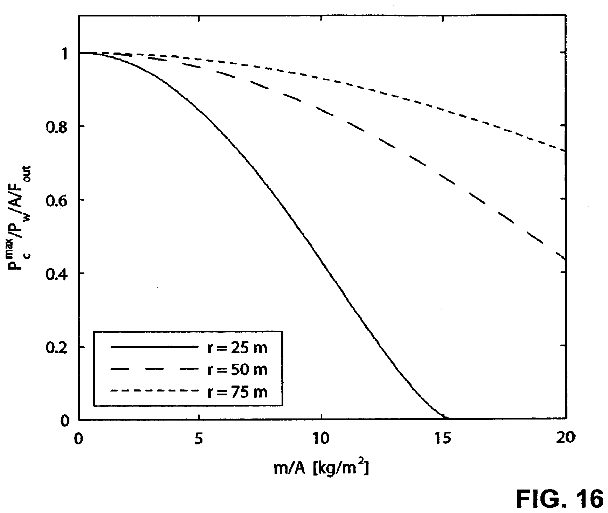

This result was first presented at AWEC 2010 [12]. The normalized power $P_c^{max}$ /$P_w$/A/$F_{out}$ as a function of the mass per area of the wing flying crosswind in a circle is shown in Figure 16. For small radius the influence of the kite mass is clearly visible. Note that the mass per wing area of high efficient sailplanes is more than 20 kg/m$^2$.

The presented model is of course a simplistic view. For a complete understanding of the role of the wing mass in kitepower dynamic simulations are mandatory which are, however, beyond the scope of this article. Nevertheless, it becomes obvious that next to a high aerodynamic efficiency (high $F_{out}$, small $F_{in}$) the mass of the wing is a very critical element of kite power. While surf kites from the sport industry are clearly very light (less than 1 kg/m$^2$), both the traction force factor $F_{out}$ and the retraction force factor $F_{in}$ are poor. On the other hand sail plane like configurations have good force factors but tend to be heavy. New light weight structures such as Tensairity [13] can be crucial to develop the ideal wing for kitepower which is a synergetic combination of a surf kite and a sailplane.

Another aspect related to the mass is the minimal wind speed at which a static kite remains airborne

$$v_{w,min} = \sqrt{r_{min} g} \qquad (54)$$

with g the gravitational acceleration. With $C_L$ = 1 one obtains $v_{w,min}$ = 4 m/s for m/A = 1 kg/m$^2$ and $v_{w,min}$ = 9 m/s for m/A = 5 kg/m$^2$. Whether it is important for a kite power system to have $v_{w,min}$ in the order of a few meters per second where typical winds blow is still an open question. But a low $v_{w,min}$ can have major implications on the design of the launching and landing concept for pumping cycle kite power systems.

6. Conclusion

Pumping cycle kite power is an interesting AWE concept. The proposed theory shows that the mechanical efficiency of the system is determined by the two force factors $F_{out}$ and $F_{in}$. Maximal cycle power is produced for a reel out speed of about ¼ of the wind speed and a reel in speed of 1.5 times the wind speed for a force ratio of 100 for winds yielding no constrains on tether force and power. The retraction power is close to the traction power. Thus, the optimal strategy for a pumping cycle kite power system is to reel in fast at high power and thus to minimize the time where no energy is produced. The optimal cycle power is about 75% of the maximal traction power for a force ratio of 100. In an intermediate wind range the tether force can be limited by an increased real out speed. The analysis shows that this 3 phase strategy reduces the maximal cycle power. The system needs to be carefully optimised in terms of tether force and power for a given wind distribution. The elevation angle has a strong impact on the produced power. Reasonable values are in the range of 30° above ground which reduces the cycle power to 65%. Also the mass of the kite has an influence on the produced power for heavier kites when small curvature radii are flown. This is the case when the kite flies at altitudes of only a few hundred meters. Overall, taking retraction and elevation into account, a well-designed pumping cycle kite power system might reach up to 50 % of the traction power determined by Loyd. This sets severe constraints on the design of the kite: the ideal tethered wing (twing) for a pumping system has a high $F_{out}$, a low $F_{in}$, a high wing loading combined with minimal mass. We at the Center for Synergetic Structures strive to develop this twing.

References

[1] LOYD, M.L. Crosswind kite power. Journal of energy. Vol. 4, no. 3, 1980, pp. 106-111.
[2] GOELA, J.S., VIJAYKUMAR, R., ZIMMERMANN, R.H. Performance characteristics of a kite-powered pump. Transactions of the ASME. Vol. 108, 1986, pp. 188-193.
[3] OCKELS, W.J. Laddermill, a novel concept to exploit the energy in the airspace. Aircraft Design. Vol. 4, 2001, pp. 81-97.
[4] ARGATOV, I., SILVENNOINEN, R. Energy conversion efficiency of the pumping kite wind generator. Renewable Energy. Vol. 35, 2010, pp. 1052-1060.
[5] ILZHOEFER, A., HOUSKA, B., DIEHL, M. Nonlinear MPC of kites under varying wind conditions for a new class of large-scale wind power generators. International Journal of robust and nonlinear control. Vol.17, 2007, pp. 1590-1599.
[6] TERINK, E.J., BREUKELS, J., SCHMEHL, R., OCKELS, W.J. Flight dynamics and stability of a tethered inflatable kiteplane. Journal of aircraft. Vol. 48, no. 2, 2011, pp. 503-513.
[7] HAU, E. Windkraftanlagen: Grundlagen, Technik, Einsatz, Wirtschaftlichkeit. Springer 2008.
[8] FAGIANO, L., MILANESE, M., PIGA, D. High-altitude wind power generation. IEEE Transactions on Energy Conversion. Vol. 25, no. 1, 2010, pp. 168-180.
[9] ARGATOV, I., SILVENNOINEN, R. Structural optimization of a pumping kite wind generator. Structural and Multidisciplinary Optimization. Vol. 40, 2010, pp. 585-595.
[10] ARGATOV, I., RAUTAKORPI, P., SILVENNOINEN, R. Estimation of the mechanical energy output of the kite wind generator. Renewable Energy Conversion. Vol. 34, 2009, pp. 1525-1532.
[11] ARGATOV, I., SILVENNOINEN, R. Asymptotic modelling of unconstrained control of a tethered power kite moving along a given closed-loop spherical trajectory. Journal of Engineering Mathematics. Vol. 72, 2012, pp. 187-203.
[12] LUCHSINGER, R.H. Weight matters: Tensairity kites. AWEC 2010, Stanford, USA. http://www.awec2010.com/public/views/pages/presentations.php
[13] BREUER, J.M.C., Luchsinger, R.H. Inflatable kites using the concept of Tensairity. Aerospace Science and Technology. Vol 14, no. 8, 2010, pp. 557-563.

Furthermore, the following items are stated with respect to the invention:

Item 1. Method for controlling a flying object (2, 20) having a stiff airfoil that can be controlled by means of a roll movement for carrying out lateral turns, characterised in that the flying object (2, 20) is connected by means of at least two tethers (2, 20) to a ground station (5) such that the flying object (2, 20) is rolled during flight by a differential movement of the tethers (3, 4), and that the flying object (2, 20) is rolled during flight by such differential movements and is thus manoeuvred through the turning flight that is caused in this way.

Item 2. Method according to Item 1, wherein each of the at least two tethers (3, 4) is connected to the ground station (5) and wherein the differential movement is produced in the ground station (5).

Item 3. Method according to one of Items 1 or 2, wherein the flying object (2, 20) is further manoeuvred during flight by means of a pitch movement, which is carried out by a means for changing the angle of attack that is mounted on the same, preferably in the form of an elevator (24), wherein the means in turn is preferably controlled by the ground station (5).

Item 4. Method according to Item 1, wherein the flying object (2, 20) is manoeuvred during flight such that it preferably repeatedly flies a cycle consisting of a power phase and a depower phase, wherein the flying object (2, 20) generates power in the power phase and consumes power in the depower phase, and wherein the flying object (2, 20) is further manoeuvred in the depower phase such that the energy consumed during retraction is minimal.

Item 5. Method according to Item 1, wherein the flying object (2, 20) is manoeuvred during flight such that it starts a cycle consisting of a power phase and a depower phase, preferably repeatedly, wherein the flying object (2, 20) generates work during the power phase and consumes work in the depower phase, and wherein the flying object (2, 20) is manoeuvred during the cycle such that the average power recovered during the cycle is almost or essentially maximised.

Item 6. Method according to Item 5, wherein maximising the averaged power over a cycle is carried out by means of the reel out speed ($v_{out}$) and the reel in speed ($v_{in}$) of the tethers by setting a predetermined ratio of the reel out speed ($v_{out}$) to the reel in speed ($v_{in}$).

Item 7. Method according to Item 6, wherein the reel in speed ($v_{in}$) is three times to six times, particularly preferably four times to six times and very preferably four and a half times to five and a half times the reel out speed ($v_{out}$).

Item 8. Method according to Item 6, wherein the reel out speed ($v_{out}$) is 0.2 times to 0.33 times the wind speed, preferably multiplied by a factor for the inclination angle of the tethers relative to the ground, particularly preferably with a value that essentially corresponds to the cosine of the inclination angle.

Item 9. Method according to Items 3 and 5, wherein the angle of attack of the flying object is set for a predetermined reel out speed ($v_{out}$) such that the force introduced into the tethers (3, 4) is essentially maximised, and wherein the angle of attack is preferably adjusted for a predetermined reel in speed such that the resultant of the lift and drag of the flying object is essentially minimised.

Item 10. Method according to Item 1, wherein the flying object (2, 20) generates power in a power phase by pulling on the tethers (3, 4) reeled out from the ground station (5) and wherein the differential movement is carried out by the ground station (5) releasing a respective tether (3, 4) faster compared to the other tether (4, 3) for the period of a roll movement with regard to a turn that is currently to be flown.

Item 11. Tethered flying object (2, 20) for carrying out the method according to Item 1, which can be connected by means of tethers (3, 4) to a ground station (5), characterised by at least two pivot points, each for one tether, wherein the pivot points (22, 23) are disposed on the flying object (2, 20) such that the same can be rolled during tethered flight by means of differential operation of the at least two tethers (3, 4), wherein the flying object (2, 20) is designed such that it performs a lateral turn during flight because of a roll movement.

Item 12. Tethered flying object (2, 20) according to Item 11, wherein a ground station (5) and two tethers (3, 4) extending from the same to the flying object (2, 20) and connected to the flying object are provided, and wherein the ground station (5) comprises an actuating device (6, 7, 8, 9, 13, 14, 15) for the tethers (3, 4) designed for differential movement of the tethers (3, 4) such that the flying object (2, 20) can be manoeuvred during flight for a predetermined turning flight.

Item 13. Tethered flying object (2, 20) according to Item 11, wherein a means for changing the angle of attack during flight is provided on the flying object (2, 20), preferably in the form of an elevator (24).

Item 14. Tethered flying object (2, 20) according to Item 12, wherein the means for carrying out the pitching motion can be remotely controlled by the ground station (5).

Item 15. Tethered flying object (2, 20) according to Item 11, wherein the ground station (5) comprises a controller (13) for controlling the reel out speed ($v_{out}$) and the reel in speed ($v_{in}$) such that said rates ($v_{out}$, $v_{in}$) each have a predetermined value essentially uniformly during operation over a flight cycle.

Item 16. Tethered flying object (2, 20) according to Item 15, wherein the controller (13) is designed to adjust the reel in speed ($v_{in}$) in a range of three times to six times, preferably four times to six times and particularly preferably four and a half times to five and a half times the reel out speed ($v_{out}$).

Item 17. Tethered flying object (2, 20) according to Item 15, wherein the controller (13) is designed to set the reel out speed ($v_{out}$) to 0.2 times to 0.33 times the wind speed, preferably multiplied by a factor for the inclination angle of the tethers relative to the ground, which particularly preferably corresponds essentially to a value of the cosine of the inclination angle.

Item 18. Tethered flying object (2, 20) according to Item 13, wherein the ground station (5) comprises a controller (13) for the means for changing the angle of attack such that the tethered flying object (2, 20) flies a depower phase with a predetermined route during operation.

Item 18. Tethered flying object (2, 20) according to Item 11, wherein the actuating device (6, 7, 8, 9, 13, 14, 15) comprises a device for angle compensation, which detects and changes and preferably compensates a differential movement of the tethers (3, 4) resulting from the lateral deflection of the tethers (3, 4) relative to the ground station (5).

Item 19. Tethered flying object (2, 20) according to Item 14, wherein the controller (13) for the actuating device (6, 7, 8, 9, 13, 14, 15) is designed to control the actuating device (6, 7, 8, 9, 13, 14, 15) to produce differential movements such that the flying object (2, 20) follows a predetermined flight path, wherein the controller (13) is preferably designed so that a respective tether (3, 4) is released faster compared to the other tether (4, 3) for the duration of a roll movement related to a turn that is to currently be flown.

Item 20. Tethered flying object (2, 20) according to Item 12, wherein the pivot points (22, 23, 53) for the tethers (3, 4) are disposed at or before the position of the centre of gravity (52) of the flying object (2, 20) in the longitudinal direction of the flying object (2, 20).

Item 21. Tethered flying object (2, 20) according to Item 20, wherein the centre of gravity (52) lies before the neutral point (51).

Item 22. Flying object (2, 20) according to any one of Items 20 to 21, wherein the pivot points (22, 23, 53) for the tethers (3, 4) are provided at the position of the greatest profile thickness of the stiff airfoil (21).

Item 23. Ground station (5) for a flying object (2, 20) with a stiff airfoil (21), with the features of any one or more of Items 11 to 22.

Item 24. Method for the operation of a system for recovery of wind energy by a flying object with a stiff airfoil connected to a ground station by means of tethers, which is manoeuvred during flight such that it flies a cycle consisting of a power phase and a recovery phase, preferably repeatedly, wherein the flying object generates power in the power phase and consumes power in the depower phase, and wherein the flying object (2, 20) is manoeuvred during the cycle such that the average power recovered during the cycle is almost or essentially maximised.

Item 25. Method according to Item 24, wherein maximising the averaged power over a cycle is carried out by means of the reel out speed ($v_{out}$) and the reel in speed ($v_{in}$) of the tethers by setting a predetermined ratio of the reel in speed ($v_{in}$) to the reel out speed (vout).

Item 26. Method according to Item 25, wherein the ratio of the reel in speed ($v_{in}$) to the reel out speed ($v_{out}$) is determined by adopting a value for a flying object coefficient $K = F_{out}/F_{in}$ in the range from 0 to a maximum of 100 in a first step, the associated values of $\gamma_{in}$ and for $\gamma_{out}$ in the characteristic curve diagram are taken for said value of K in the characteristic curve for $\gamma_{in}$ and for $\gamma_{out}$ and finally in a third step the associated values for the reel in speed ($v_{in}$) to the reel out speed ($v_{out}$) are determined from $\gamma_{in}$ and for $\gamma_{out}$ using the current wind speed.

Item 27. Method according to Item 26, wherein the flying object coefficient K for a flying object is determined by flying the flying object in a power phase with essentially maximum lift and determining the achieved traction force $T_{out}$ on the tethers and wherein the flying object is flown in a depower phase with essentially minimum angle of attack and determining the achieved recovery force $T_{in}$ on the tethers and the flying object coefficient K is calculated from said measurement values using the coefficient equations.

Item 28. Method according to Item 26 or 27, in which the reel in speed ($v_{in}$) and the reel out speed ($v_{out}$) are optimised during operation by first varying the reel out speed ($v_{out}$) and changing it in the direction of improved power until a maximum value exists and then also varying the reel in speed ($v_{in}$) and changing it in the direction of further improved power until a maximum value of the average power over the cycle exists, and repeating said steps until the power of the cycle is not to be increased further.

**Claims**

1. Method for controlling a flying object (2, 20) having a stiff airfoil (21) and being connected by means of two tethers (2, 20) to a ground station (5),

   wherein the flying object (2, 20) is connected such to the ground station (5) by means of only two tethers (3, 4), and wherein the flying object (2, 20) is rolled during flight by a differential movement of the tethers (3, 4), **characterized in that** the pivot points (22, 23; 53) for the tethers (3, 4) are disposed, along the longitudinal direction of the flying object (2, 20), at or before the position of the centre of gravity (52) of the flying object (2, 20) and the flying object (2, 20) comprises vertical stabilizers (26), such that the stiff airfoil (21) can be controlled by means of a roll movement for carrying out lateral turns and the flying object (2, 20) is enabled to be manoeuvred through a turning flight by mean of differential operation of the tethers (3, 4), and that the flying object (2, 20) is rolled during flight by such differential movements and is thus manoeuvred through the turning flight that is caused in this way.

2. Method according to Claim 1, wherein each of the two tethers (3, 4) is connected to the ground station (5) and wherein the differential movement is produced in the ground station (5).

3. Method according to one of Claims 1 or 2, wherein the flying object (2, 20) is further manoeuvred during flight by means of a pitch movement, which is carried out by a device for changing the angle of attack that is mounted on the same, preferably in the form of an elevator (24), wherein the device in turn is preferably controlled by the ground station (5).

4. Method according to one of the preceding Claims, wherein the flying object (2, 20) is manoeuvred during flight such, that it preferably repeatedly flies a cycle consisting of a power phase and a depower phase, wherein electrical power is generated in the power phase and consumed in the depower phase by means of the flying object (2, 20).

5. Flying object (2, 20) with a stiff airfoil (21), for carrying out the method according to one of the preceding Claims, which flying object (2, 20) can be connected by means of tethers (3, 4) to a ground station (5), and which has two pivot points (22, 23; 53) for the connection of these tethers (3, 4), **characterized in that** the pivot points (22, 23; 53) are disposed, along the longitudinal direction of the flying object (2, 20), at or before the position of the centre of gravity (52) of the flying object (2, 20) and the flying object (2, 20) comprises vertical stabilizers (26), such that the same can be rolled during tethered flight by means of differential operation of the only two tethers (3, 4), and that the flying object (2, 20) is designed such, that it performs a lateral turn during flight because of a roll movement.

6. Flying object (2, 20) according to Claim 5, wherein the pivot points (22, 23; 53) for the tethers (3, 4) are provided, in span direction, at a distance from the centre of the airfoil (21) in the region of one quarter to one half, preferably 37% to 47% and in particular 42%, of the distance between the centre and a wing tip of the airfoil (21).

7. Flying object (2, 20) according to one of Claims 5 or 6, wherein the distance between the pivot points (22, 23; 53) is between 25% and 60%, in particular about 40%, of the entire span of the airfoil (21).

8. Flying object (2, 20) according to one of Claims 5 to 7, wherein, along the longitudinal direction of the flying object (2, 20), the centre of gravity (52) of the flying object (2, 20) lies before the aerodynamic neutral point (51) of the flying object (2, 20).

9. Flying object (2, 20) according to any one of Claims 5 to 8, wherein the pivot points (22, 23; 53) for the tethers (3, 4) are provided at the position of the greatest profile thickness of the stiff airfoil (21) and are provided in particular at the airfoil in chord direction at a distance from the leading edge of about one quarter of the chord length of the airfoil (21).

10. Flying object (2, 20) according to any one of Claims 5 to 9, wherein the pivot points (22, 23; 53) are arranged, in the vertical direction, within the airfoil (21) or directly at the outer surface of the airfoil (21).

11. Flying object (2, 20) according to any one of Claims 5 to 10, wherein a device for changing the angle of attack during flight is provided on the flying object (2, 20), preferably in the form of an elevator (24).

12. Device for generating electrical energy comprising a tethered flying object (2, 20) according to any one of Claims 5 to 11, a ground station (5) and two tethers (3, 4), wherein two tethers (3, 4) extend from the ground station (5) to the flying object (2, 20) and are connected to the flying object (2, 20), and wherein the ground station (5) comprises an actuating device (6, 7, 8, 9, 13, 14, 15) for the tethers (3, 4) designed for differential movement of the tethers (3, 4) such that the flying object (2, 20) can be manoeuvred during flight for a predetermined turning flight.

13. Device according to Claim 12, wherein a device for changing the angle of attack during flight is provided on the flying object (2, 20), preferably in the form of an elevator (24), and wherein the ground station (5) comprises a controller (13) for controlling the device for changing the angle of attack such that the tethered flying object (2, 20) flies a depower phase with a predetermined route during operation.

14. Device according to one of Claims 12 or 13, wherein the actuating device (6, 7, 8, 9, 13, 14, 15) comprises a device for angle compensation, which is adapted to detect and change and preferably compensate a differential movement of the tethers (3, 4) resulting from the lateral deflection of the tethers (3, 4) relative to the ground station (5).

**Patentansprüche**

1. Verfahren zum Steuern eines Flugobjekts (2, 20), das eine steife Tragfläche (21) hat und mittels zweier Leinen (2, 20) mit einer Bodenstation (5) verbunden ist,

   wobei das Flugobjekt (2, 20) so mittels nur zweier Leinen (3, 4) mit der Bodenstation (5) verbunden ist,
   und wobei das Flugobjekt (2, 20) während des Fluges durch eine differentielle Bewegung der Leinen (3, 4) gerollt wird,
   **dadurch gekennzeichnet, dass**
   die Anlenkpunkte (22, 23; 53) für die Leinen (3, 4) entlang der Längsrichtung des Flugobjekts (2, 20) an oder vor der Position des Schwerpunktes (52) des Flugobjekts (2, 20) angeordnet sind und das Flugobjekt (2, 20) vertikale Stabilisatoren (26) aufweist, so dass die steife Tragfläche (21) gesteuert werden kann mittels einer Rollbewegung zum Ausführen von seitlichen Kurven und das Flugobjekt (2, 20) dazu befähigt ist, mittels differentieller Betätigung der Leinen (3, 4) durch einen Kurvenflug manövriert zu werden,
   und dass das Flugobjekt (2, 20) während des Fluges durch solche differentiellen Bewegungen gerollt wird und somit durch einen auf diese Weise verursachten Kurvenflug manövriert wird.

2. Verfahren gemäss Anspruch 1, wobei jede der zwei Leinen (3, 4) mit der Bodenstation (5) verbunden ist, und wobei die differentielle Bewegung in der Bodenstation (5) erzeugt wird.

3. Verfahren gemäss einem der Ansprüche 1 oder 2, wobei das Flugobjekt (2, 20) zudem mittels einer Nickbewegung durch den Flug manövriert wird, welche durch eine daran angebrachte Vorrichtung zum Ändern des Anstellwinkels durchgeführt wird, vorzugsweise in Form eines Höhenruders (24), wobei die Vorrichtung wiederum bevorzugt durch die Bodenstation (5) gesteuert wird.

4. Verfahren gemäss einem der vorhergehenden Ansprüche, wobei das Flugobjekt (2, 20) während des Fluges derart manövriert wird, dass es bevorzugt wiederholt einen Zyklus bestehend aus einer Powerphase und einer Depowerphase fliegt, wobei elektrische Leistung durch das Flugobjekt (2, 20) in der Powerphase erzeugt und in der Depowerphase verbraucht wird.

25

**5.** Flugobjekt (2, 20) mit einer steifen Tragfläche (21) zum Ausführen des Verfahrens gemäss einem der vorhergehenden Ansprüche, welches Flugobjekt (2, 20) mittels Leinen (3, 4) mit einer Bodenstation (5) verbunden werden kann, und welches zwei Anlenkpunkte (22, 23; 53) hat zur Verbindung dieser Leinen (3, 4), **dadurch gekennzeichnet, dass** die Anlenkpunkte (22, 23; 53) entlang der Längsrichtung des Flugobjekts (2, 20) an oder vor der Position des Schwerpunktes (52) des Flugobjekts (2, 20) angeordnet sind und das Flugobjekt (2, 20) vertikale Stabilisatoren (26) aufweist, so dass dieses während des angebundenen Fluges mittels differentieller Betätigung der nur zwei Leinen (3, 4) gerollt werden kann, und dass das Flugobjekt (2, 20) derart ausgebildet ist, dass es während des Fluges aufgrund einer Rollbewegung eine seitliche Kurve durchführt.

**6.** Flugobjekt (2, 20) gemäss Anspruch 5, wobei die Anlenkpunkte (22, 23; 53) für die Leinen (3, 4) in Spannrichtung beabstandet vom Zentrum der Tragfläche (21) im Bereich von einem Viertel bis zu einer Hälfte, bevorzugt 37% bis 47% und insbesondere 42%, der Distanz zwischen dem Zentrum und der Flügelspitze der Tragfläche (21) vorgesehen sind.

**7.** Flugobjekt (2, 20) gemäss einem der Ansprüche 5 oder 6, wobei die Distanz zwischen den Anlenkpunkten (22, 23; 53) zwischen 25% und 60%, insbesondere ungefähr 40%, der gesamten Spannweite der Tragfläche (21) ist.

**8.** Flugobjekt (2, 20) gemäss einem der Ansprüche 5 bis 7, wobei der Schwerpunkt (52) des Flugobjekts (2, 20) entlang der Längsrichtung des Flugobjekts (2, 20) vor dem aerodynamisch neutralen Punkt (51) des Flugobjekts (2, 20) liegt.

**9.** Flugobjekt (2, 20) gemäss einem der Ansprüche 5 oder 8, wobei die Anlenkpunkte (22, 23; 53) für die Leinen (3, 4) an der Position der grössten Profildicke der steifen Tragfläche (21) vorgesehen sind und insbesondere an der Tragfläche in Richtung der Profilsehne um ungefähr einen Viertel der Profilsehnenlänge der Tragfläche (21) beabstandet von der Vorderkante vorgesehen sind.

**10.** Flugobjekt (2, 20) gemäss einem der Ansprüche 5 oder 9, wobei die Anlenkpunkte (22, 23; 53) in vertikaler Richtung innerhalb der Tragfläche (21) oder direkt an der äusseren Oberfläche der Tragfläche (21) angeordnet sind.

**11.** Flugobjekt (2, 20) gemäss einem der Ansprüche 5 oder 10, wobei eine Vorrichtung zum Ändern des Anstellwinkels während des Fluges am Flugobjekt (2, 20) vorgesehen ist, bevorzugt in Form eines Höhenruders.

**12.** Vorrichtung zum Erzeugen von elektrischer Energie aufweisend ein angebundenes Flugobjekt (2, 20) gemäss einem der Ansprüche 5 bis 11, eine Bodenstation (5) und zwei Leinen (3, 4), wobei sich zwei Leinen (3, 4) von der Bodenstation (5) zum Flugobjekt (2, 20) erstrecken und mit dem Flugobjekt (2, 20) verbunden sind, und wobei die Bodenstation (5) eine Betätigungsvorrichtung (6, 7, 8, 9, 13, 14, 15) für die Leinen (3, 4) aufweist, welche derart zur differentiellen Bewegung der Leinen (3, 4) ausgebildet ist, dass das Flugobjekt (2, 20) während des Fluges in einen vorbestimmten Kurvenflug manövriert werden kann.

**13.** Vorrichtung gemäss Anspruch 12, wobei eine Vorrichtung zum Ändern des Anstellwinkels während des Fluges am Flugobjekt (2, 20) vorgesehen ist, bevorzugt in Form eines Höhenruders (24), und wobei die Bodenstation (5) eine Steuerung (13) aufweist, um die Vorrichtung zum Ändern des Anstellwinkels derart zu steuert, dass das angebundene Flugobjekt (2, 20) während des Betriebes eine Depowerphase mit einer vorbestimmten Route fliegt.

**14.** Vorrichtung gemäss einem der Ansprüche 12 oder 13, wobei die Betätigungsvorrichtung (6, 7, 8, 9, 13, 14, 15) eine Vorrichtung zur Winkelkompensation aufweist, welche dazu ausgebildet ist, eine differentielle Bewegung der Leinen (3, 4), welche durch die seitliche Auslenkung der Leinen (3, 4) relativ zur Bodenstation (5) verursacht wird, zu detektieren und zu ändern und bevorzugt zu kompensieren.

**Revendications**

**1.** Un procédé pour commander un objet volant (2, 20) ayant une surface portante rigide (21) et étant connecté au moyen de deux amarres (2, 20) à une station au sol (5),

dans lequel l'objet volant (2, 20) est ainsi connecté à la station au sol (5) par au moyen d'uniquement deux amarres (3, 4),
et dans lequel l'objet volant (2, 20) est roulé en vol au moyen d'un mouvement différentiel des amarres (3, 4), **caractérisé en ce que**

les points pivot (22, 23 ; 53) pour les amarres (3, 4) sont disposés, le long de la direction longitudinale de l'objet volant (2, 20), au niveau de où avant la position du centre de gravité (52) de l'objet volant (2, 20) et l'objet volant (2, 20) comprend des stabilisateurs verticaux (26), de sorte que la surface portante rigide (21) peut être commandée au moyen d'un mouvement de roulis afin d'effectuer des virements latéraux et l'objet volant (2, 20) est habilité à être manoeuvré à travers un vol de virage au moyen de l'opération différentielle des amarres (3, 4), et que l'objet volant (2, 20) est roulé en vol par de tels mouvements différentiels et est ainsi manoeuvré à travers le vol de virage ainsi provoqué.

**2.** Un procédé selon la revendication 1, dans lequel chacune des deux amarres (3, 4) est connectée à la station au sol (5) et dans lequel le mouvement différentiel est produit dans la station au sol (5.)

**3.** Un procédé selon l'une des revendications 1 ou 2, dans lequel l'objet volant (2, 20) est en outre manoeuvré en vol au moyen d'un mouvement de tangage, qui est effectué par un dispositif pour changer l'angle d'attaque qui est monté sur le même, préférablement en forme d'un volet de profondeur (24), dans lequel le dispositif est à son tour préférablement commandé par la station au sol (5).

**4.** Un procédé selon une des revendications précédentes, dans lequel l'objet volant (2, 20) est manoeuvré en vol de sorte que celui-ci préférablement vole de manière répétée un cycle consistant d'une phase de tension et une phase de dé-tension, dans lequel de l'énergie électrique est générée dans la phase tension et est consommée dans la phase dé-tension au moyen de l'objet volant (2, 20).

**5.** Un objet volant (2, 20) ayant une surface portante rigide (21), pour effectuer le procédé selon une des revendications précédentes, lequel objet volant (2, 20) peut être connecté au moyen d'amarres (3, 4) à une station au sol (5), et qui a deux points pivot (22, 23, 53) pour la connexion de ces amarres (3, 4), **caractérisé en ce que** les points pivot (22, 23, 53) sont disposés, le long de la direction longitudinale de l'objet volant (2, 20), au niveau de ou avant la position du centre du gravité (52) de l'objet volant (2, 20) et l'objet volant (2, 20) comprend des stabilisateur verticaux (26), de sorte que le même peut être roulé en vol attaché, au moyen d'une opération différentielle des uniquement deux amarres (3, 4), et que l'objet volant (2, 20) est conçu de sorte qu'il effectue un virement latéral en vol à cause du mouvement de roulis.

**6.** L'objet volant (2, 20) selon la revendication 5, dans lequel les points pivot (22, 23, 53) pour les amarres (3, 4) sont prévus, en direction d'envergure, à une distance du centre de la surface portante (21) dans la plage d'un quart à une moitié, préférablement de 37% à 47 % et en particulier de 42%, de la distance entre le centre et un saumon d'aile de la surface portante (21).

**7.** L'objet volant (2, 20) selon une des revendications 5 ou 6, dans lequel la distance entre les points pivot (22, 23, 53) est entre 25% et 60%, en particulier environ 40%, de l'entière envergure de la surface portante (21).

**8.** L'objet volant (2, 20) selon une des revendications 5 à 7, dans lequel, le long de la direction longitudinale de l'objet volant (2, 20), le centre de gravité (52) de l'objet volant (2, 20) se situe avant le point neutre aérodynamique (51) de l'objet volant (2, 20).

**9.** L'objet volant (2, 20) selon l'une quelconque des revendications 5 à 8, dans lequel les points pivot (22, 23, 53) pour les amarres (3, 4) sont prévus à la position ayant la largeur en profil la plus importante de la surface portante rigide (21) et sont prévus en particulier au niveau de la surface portante en direction de corde à une distance du bord d'attaque d'environ un quart de la longueur de corde de la surface portante (21).

**10.** L'objet volant (2, 20) selon l'une quelconque des revendications 5 à 9, dans lequel les points pivot (22, 23, 53) sont disposés, en direction verticale, à l'intérieur de la surface portante (21) ou directement au niveau de la surface extérieure de la surface portante (21).

**11.** L'objet volant (2, 20) selon l'une quelconque des revendications 5 à 10, dans lequel un dispositif pour changer d'angle attaque en vol est prévu sur l'objet volant (2, 20), préférablement en forme d'un volet de profondeur (24).

**12.** Un dispositif pour générer de l'énergie électrique comprenant un objet volant amarré (2, 20) selon l'une quelconque des revendications 5 à 11, une station au sol (5), et deux amarres (3, 4), dans lequel les deux amarres (3, 4) s'étendent depuis la station au sol (5) vers l'objet volant (2, 20) sont connectées à l'objet volant (2, 20), et dans lequel la station au sol (5) comprend un dispositif actionneur (6, 7, 8, 9, 13, 14, 15) pour les amarres (3, 4) conçu pour un mouvement différentiel des amarres (3, 4) de sorte que l'objet volant (2, 20) peut être manoeuvré en vol pour un vol de virage prédéterminé.

13. Un dispositif selon la revendication 12, dans lequel un dispositif pour changer l'angle d'attaque en vol est prévu sur l'objet volant (2, 20), préférablement en forme d'un volet de profondeur (24), et dans lequel la station au sol (5) comprend un dispositif de commande (13) pour commander le dispositif pour changer l'angle d'attaque de sorte que l'objet volant amarré (2, 20) vole une phase de dé-tension avec un parcours prédéterminé durant l'opération.

14. Un dispositif selon une des revendications 12 ou 13, dans lequel le dispositif actionneur (6, 7, 8, 9, 13, 14, 15) comprend un dispositif pour la compensation d'angle, qui est adapté pour détecter et changer et préférablement compenser un mouvement différentiel des amarres (3, 4) résultant de la déflection latérale des amarres (3, 4) par rapport à la station au sol (5).

**FIG. 1**

**FIG. 2a**

FIG. 2b (prior art)

FIG. 2c

FIG. 2d

FIG. 3a

side view

FIG. 3b

**FIG. 3c**

**FIG. 4a**

**FIG. 4b**

EP 3 041 738 B1

**FIG. 4c**

FIG. 4d

FIG. 4e

EP 3 041 738 B1

FIG. 5

FIG. 6

FIG. 7

**FIG. 8**

**FIG. 9**

FIG. 10

FIG. 11

## Weibull distribution: $v_{av}$ = 5 m/s

**FIG. 12**

## $v_{av}$=5 m/s, $v_n$=10 m/s, $v_{cut}$=25 m/s, k=1.5

**FIG. 13**

$v_n = 10$ m/s, $v_{cut} = 25$ m/s, $k = 1.5$

**FIG. 14**

**FIG. 15**

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011121557 A
- US 20020040948 A

### Non-patent literature cited in the description

- **LOYD, M.L.** Crosswind kite power. *Journal of energy,* 1980, vol. 4 (3), 106-111
- **GOELA, J.S. ; VIJAYKUMAR, R. ; ZIMMERMANN, R.H.** Performance characteristics of a kite-powered pump. *Transactions of the ASME,* 1986, vol. 108, 188-193
- **OCKELS, W.J.** Laddermill, a novel concept to exploit the energy in the airspace. *Aircraft Design,* 2001, vol. 4, 81-97
- **ARGATOV, I. ; SILVENNOINEN, R.** Energy conversion efficiency of the pumping kite wind generator. *Renewable Energy,* 2010, vol. 35, 1052-1060
- **ILZHOEFER, A. ; HOUSKA, B. ; DIEHL, M.** Nonlinear MPC of kites under varying wind conditions for a new class of large-scale wind power generators. *International Journal of robust and nonlinear control,* 2007, vol. 17, 1590-1599
- **TERINK, E.J. ; BREUKELS, J. ; SCHMEHL, R. ; OCKELS, W.J.** Flight dynamics and stability of a tethered inflatable kiteplane. *Journal of aircraft,* 2011, vol. 48 (2), 503-513
- **HAU, E.** Windkraftanlagen: Grundlagen, Technik, Einsatz, Wirtschaftlichkeit. Springer, 2008
- **FAGIANO, L. ; MILANESE, M. ; PIGA, D.** High-altitude wind power generation. *IEEE Transactions on Energy Conversion,* 2010, vol. 25 (1), 168-180
- **ARGATOV, I. ; SILVENNOINEN, R.** Structural optimization of a pumping kite wind generator. *Structural and Multidisciplinary Optimization,* 2010, vol. 40, 585-595
- **ARGATOV, I. ; RAUTAKORPI, P. ; SILVENNOINEN, R.** Estimation of the mechanical energy output of the kite wind generator. *Renewable Energy Conversion,* 2009, vol. 34, 1525-1532
- **ARGATOV, I. ; SILVENNOINEN, R.** Asymptotic modelling of unconstrained control of a tethered power kite moving along a given closed-loop spherical trajectory. *Journal of Engineering Mathematics,* 2012, vol. 72, 187-203
- **LUCHSINGER, R.H.** *Weight matters: Tensairity kites,* 2010, http://www.awec2010.com/public/views/pages/presentations.php
- **BREUER, J.M.C. ; LUCHSINGER, R.H. ; INFLATABLE KITES USING THE CONCEPT OF TENSAIRITY.** *Aerospace Science and Technology,* 2010, vol. 14 (8), 557-563